(19) Europäisches Patentamt
European Patent Office
Office européen des brevets

(11) **EP 3 634 029 B1**

(12) **EUROPÄISCHE PATENTSCHRIFT**

(45) Veröffentlichungstag und Bekanntmachung des Hinweises auf die Patenterteilung:
**02.12.2020 Patentblatt 2020/49**

(51) Int Cl.:
***H04W 24/08*** *(2009.01)*      ***H04W 16/20*** *(2009.01)*
***H04W 24/10*** *(2009.01)*      ***H04W 84/12*** *(2009.01)*

(21) Anmeldenummer: **18197923.8**

(22) Anmeldetag: **01.10.2018**

(54) **VERFAHREN UND KOMMUNIKATIONSEINHEIT ZUR VISUALISIERUNG EINES ABDECKUNGSBEREICHS EINES DRAHTLOSEN KOMMUNIKATIONSNETZES**

METHOD AND COMMUNICATION UNIT FOR THE VISUALISATION OF AN AREA COVERED BY A WIRELESS COMMUNICATION NETWORK

PROCÉDÉ ET UNITÉ DE COMMUNICATION DESTINÉS À LA VISUALISATION D'UNE ZONE DE COUVERTURE D'UN RÉSEAU DE COMMUNICATION SANS FIL

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**08.04.2020 Patentblatt 2020/15**

(73) Patentinhaber: **Deutsche Telekom AG**
**53113 Bonn (DE)**

(72) Erfinder:
• **Elsesser, Marcel**
  **64297 Darmstadt (DE)**
• **Rakus, Dan**
  **64297 Darmstadt (DE)**
• **Bachmann, Gregor, Dr.**
  **64807 Dieburg (DE)**
• **Grützner, Andrew**
  **64283 Darmstadt (DE)**

(74) Vertreter: **Raible Deissler Lehmann Patentanwälte PartG mbB**
**Senefelderstrasse 26**
**70176 Stuttgart (DE)**

(56) Entgegenhaltungen:
**EP-A2- 1 592 273      US-A1- 2011 244 892**
**US-A1- 2017 127 289      US-A1- 2017 243 400**
**US-B2- 9 292 951**

**Beschreibung**

Die vorliegende Erfindung betrifft ein Verfahren und eine mobile Kommunikationseinheit zur Visualisierung eines Abdeckungsbereichs eines drahtlosen lokalen Kommunikationsnetzes.

Rückmeldungen von Servicekanälen, bspw. Hotlines, Chats, Foren etc., sowie Kundenbefragungen selbst ergaben, dass viele Kunden von Netzwerkanbietern kundgeben, dass sie Probleme damit haben, ihr Heimnetzwerk zu verstehen und mögliche Störungen innerhalb des Heimnetzwerks eigenständig zu beheben. Insbesondere scheint hierbei das in vielen Haushalten verwendete lokale Funknetz, WLAN (Wireless Local Area Network), an sich ein Problem darzustellen. Viele Kunden greifen zum Telefon, um von einem eingerichteten Kundensupport Hilfe zu bekommen. Andere Kunden nutzen das Internet oder andere Ratgeber, um ihr WLAN zu optimieren. Allerdings sind Hilfestellungen oft sehr allgemein gehalten und dadurch für ein konkretes Problem, das seitens eines Nutzers bzw. Kunden auftritt, wenig hilfreich. Zwei konkrete Beispiele dazu sind:

1. Der Ratgeber bzw. Kundenberater schlägt vor, dass ein Repeater gekauft und zur Optimierung des jeweiligen WLANs genutzt werden soll. Viele Kunden sind sich allerdings dabei unsicher, ob ein Repeater in ihrem konkreten Fall weiterhelfen kann, und ob sich eine derartige Investition in den Kauf eines Repeaters überhaupt lohnt. Weiterhin bleibt dabei die Frage offen, wo genau dieser Repeater/Verstärker platziert werden muss, um die WLAN-Ausbreitung sinnvoll zu ergänzen und damit ggf. das Problem zu beheben.

2. Ein weiterer Vorschlag ist oftmals, eine Umpositionierung des Routers vorzunehmen, um eine Reichweite des WLANs in eine bestimmte Richtung eines Raumes zu erhöhen. Allerdings ist eine optimale Position des Routers im Raum schwer zu bestimmen, und ferner ist dem Kunden auch oft nicht klar, inwiefern sich eine neue Position des Routers auf die Reichweite der Ausbreitung des WLANs konkret auswirkt. Auch ist nicht klar, ob hierdurch das WLAN an einer anderen Stelle im Raum im Gegenzug schlechter wird.

Ein bisheriger Lösungsansatz für Verbindungsprobleme innerhalb eines WLANs ist z. B. ein sogenannter Speedtest. Dabei wird eine Internetgeschwindigkeit an einem bestimmten Ort innerhalb des WLANs gemessen und dargestellt. Insbesondere weniger technisch interessierte Kunden haben ihre Probleme damit, die so erhaltenen Informationen zu Up-/Downloadraten und dem Ping (Ansprechzeit) richtig zu deuten. Ein anderer Ansatz, um das unsichtbare WLAN sichtbar zu machen, ist ein Erstellen einer sogenannten "Heatmap" (Wärmekarte), die dem jeweiligen Kunden anzeigt, an welchen Stellen ein Signal, das an den jeweiligen Stellen empfangen wird, gut oder schlecht ist. Hierfür existieren bereits einige Applikationen (sogenannte Apps). Das Erstellen einer derartigen "Heatmap" ist allerdings sehr aufwendig, da der jeweilige Kunde zunächst einen Grundriss seines Wohnraums, in welchem er die Abdeckung des WLANs bestimmen möchte, erstellen und an mehreren Positionen in dem Wohnraum Messungen durchführen muss. Zudem entstehen Ungenauigkeiten aufgrund einer nicht maßstabsgetreuen Zeichnung und einer nicht ganz exakten Positionierung der jeweiligen Messstellen. Weiterhin kommt hinzu, dass dieser Aufwand auch immer nur eine Momentaufnahme des WLANs ist und sich ad hoc durch hinzukommende Störquellen wieder verändern kann.

Aus der US 9,451,413 B1 ist das Erstellen einer "Heatmap" basierend zumindest teilweise auf dem Zustand eines mobilen Geräts bekannt. Die "Heatmap" enthält eine Mehrzahl erwarteter Signaturwerte von drahtlosen Signalen, die entlang einer Vielzahl von Pfadsegmenten abgebildet sind, die navigierbaren Räumen eines Grundrisses eines Veranstaltungsorts entsprechen. Die "Heatmap" schließt erwartete Signaturwerte an anderen Orten als den mehreren Pfadsegmenten aus. Die "Heatmap" wird an das mobile Gerät übertragen. Anhand der an das mobile Gerät übermittelten "Heatmap" erhält das mobile Gerät Informationen, um abzuschätzen, wo sich das mobile Gerät befindet. Dazu muss der Zugangspunkt zu dem Funknetz bekannt sein, um anhand der dem mobilen Gerät übermittelten "Heatmap" dem mobilen Gerät zu ermöglichen, aufgrund der Stärke der durch die "Heatmap" angezeigten Signale an der jeweiligen Position des mobilen Geräts abzuschätzen, wo das mobile Gerät in Bezug zu dem Zugangspunkt lokalisiert ist. Dabei werden dem mobilen Gerät die Hilfsdaten bzw. die generierte "Heatmap" von einem externen Navigationssystem bzw. Server bereitgestellt.

Aus der US2017/0127289 A1 ist die Visualisierung eines WI-FI Signales mittels Augmented Reality bekannt. Basierend auf der Messung und Extrapolation einer Signalstärke an verschiedenen Orten eines zu betrachtenden Gebietes können Maßnahmen zur Verbesserung der Signalstärke vorgeschlagen werden.

Die US2011/0244892 A1 offenbart die Darstellung der räumlich variablen Signalstärke einer aktiven Basisstation auf einer Mobilstation zur Erkennung von Stellen mit schlechter Abdeckung. Die Abdeckung kann mittels Messung oder durch theoretische Abschätzungen bestimmt werden.

Es war nun eine Aufgabe der vorliegenden Erfindung, eine Möglichkeit vorzusehen, einen Abdeckungsbereich eines drahtlosen lokalen Kommunikationsnetzes, insbesondere eines lokalen Funknetzes bzw. WLANs zu visualisieren, i wobei der erforderliche Rechenaufwand in Bezug auf die besonderen Gegebenheiten einer mobilen Kommunikationseinheit optimiert wird.

Zur Lösung dieser Aufgabe schlägt die vorliegende Erfindung ein Verfahren und eine mobile Kommunikationseinheit mit den Merkmalen der unabhängigen Patentansprüche vor. Ausgestaltungen und vorteilhafte Weiterentwicklungen sind den jeweiligen abhängigen Patentansprüchen sowie der Beschreibung zu entnehmen.

Die Erfindung ist durch die anhängenden Ansprüche definiert.

Die vorliegende Erfindung betrifft ein Verfahren zur Visualisierung eines Abdeckungsbereichs eines drahtlosen bzw. kabellosen lokalen Kommunikationsnetzes mittels einer mobilen Kommunikationseinheit. Bei dem erfindungsgemäßen Verfahren wird mittels einer auf der mindestens einen mobilen Kommunikationseinheit implementierten Navigationsapplikation zunächst eine initiale Position der mobilen Kommunikationseinheit in einem die mobile Kommunikationseinheit umgebenden dreidimensionalen realen Raum ermittelt und als erster Punkt in einem dreidimensionalen Koordinatensystem, das dem Raum überlagert wird, bereitgestellt. Mittels einer Kamera der mobilen Kommunikationseinheit wird ein Zugangspunkt des drahtlosen lokalen Kommunikationsnetzes in einem Bild aufgenommen und anhand des Bildes von der Navigationsapplikation eine Position des Zugangspunktes in dem Koordinatensystem berechnet und als zweiter Punkt in dem Koordinatensystem bereitgestellt. An einer Mehrzahl von verschiedenen Positionen der mobilen Kommunikationseinheit in dem die mobile Kommunikationseinheit umgebenen Raum, die jeweils von der Navigationsapplikation als jeweils weiterer Punkt in dem Koordinatensystem bereitgestellt werden, wird von der mobilen Kommunikationseinheit ein jeweiliger Wert einer Empfangsqualität von von dem Zugangspunkt durch das drahtlose lokale Kommunikationsnetz an die mobile Kommunikationseinheit gesendeten Signalen gemessen und zusammen mit der jeweiligen Position der mobilen Kommunikationseinheit als jeweiliges Wertepaar abgespeichert. Auf Basis der gemessenen Wertepaare wird von einer auf der mindestens einen mobilen Kommunikationseinheit implementierten Auswerte-Applikation eine Extrapolation der Werte der Empfangsqualität auf alle von der Navigationsapplikation erfassbaren Positionen des Raumes und somit auf den Positionen jeweils zugeordneten Punkte des Koordinatensystems vorgenommen. Auf einer Anzeige einer der mobilen Kommunikationseinheit wird der Raum zusammen mit den Werten der Empfangsqualität an den den jeweiligen Werten zugeordneten Positionen als realitätserweiterte Darstellung angezeigt.

Auf der Anzeige, bspw. einem Display der mobilen Kommunikationseinheit, werden somit Werte der Empfangsqualität für alle von der Navigationsapplikation erfassbaren Positionen, d. h. sowohl die gemessenen Werte an der Mehrzahl von der Navigationsapplikation erfassten Positionen und die extrapolierten Werte an den verbleibenden von der Navigationsapplikation erfassbaren Positionen, angezeigt, insbesondere in der realitätserweiterten Darstellung an den den jeweiligen Werten zugeordneten Positionen im Raum.

In Ausgestaltung wird als drahtloses lokales Kommunikationsnetz ein lokales Funknetz bzw. ein WLAN (Wireless Local Area Network) gewählt.

Bei der mobilen Kommunikationseinheit handelt es sich bspw. um ein Smartphone, ein Tablet-PC, ein PDA oder um eine beliebig andere mobile Kommunikationseinheit, die dazu konfiguriert ist, sowohl über das lokale drahtlose Kommunikationsnetz, insbesondere ein WLAN, wie auch über eine Mobilfunkverbindung, aufgebaut auf Basis einer Mobilfunktechnologie, wie etwa GSM, insbesondere CSC, HSCSD, GPRS, EDGE, Streaming, Generic Access, Cell Broadcast, BOS-GSM, UMTS, insbesondere HSDPA, oder LTE, Daten auszutauschen bzw. zu kommunizieren. Dazu verfügt die mobile Kommunikationseinheit in der Regel über mehrere, den jeweiligen Technologien zugeordneten bzw. zuzuordnenden Transceiver. In diesem Sinne stellt die mobile Kommunikationseinheit eine Mehrfunkplattform (MRP - Multi-Radio-Platform) dar.

In weiterer Ausgestaltung wird als Zugangspunkt zu dem lokalen Kommunikationsnetz ein Router verwendet. Ein Router oder Netzwerkrouter ist ein Netzwerkgerät, das Datenpakete zwischen mehreren Rechnernetzen weiterleiten kann. Ein Router wird bspw. für eine Koppelung eines Heimnetzwerks, was insbesondere als WLAN realisiert sein kann, ans Internet, insbesondere über einen DSL- oder anderen Breitband-Anschluss, eingesetzt und entspricht somit von außerhalb des Heimnetzwerks betrachtet einem Zugangspunkt zu dem jeweiligen Heimnetzwerk bzw. dem jeweiligen WLAN.

Bei dem dreidimensionalen Raum handelt es sich in der Regel um einen geschlossenen Raum, insbesondere ein Gebäude, bspw. um einen Wohnraum, wie ein Wohnhaus oder eine Wohnung. Bei dem Raum kann es sich auch nur um einen oder mehrere Bereiche innerhalb des voranstehend genannten geschlossenen Raums handeln.

Sowohl bei der Navigations- wie auch bei der Auswerteapplikation handelt es sich jeweils um eine Anwendungssoftware bzw. ein Anwendungsprogramm, kurz App, insbesondere eine mobile App, die auf der mobilen Kommunikationseinheit installierbar bzw. installiert oder von der mobilen Kommunikationseinheit von einem zentralen Server abrufbar und auf der mobilen Kommunikationseinheit ausführbar ist. Die Navigationsapplikation und die Auswerteapplikation können auch in einer einzigen Anwendungssoftware bzw. Applikation, einer Navigations- und Auswerteapplikation, zusammengeführt sein.

Erfindungsgemäß wird die jeweilige Empfangsqualität durch Messung eines jeweiligen Received Signal Strength Indicators (RSSI) gemessen. Der Received Signal Strength Indicator stellt einen Indikator für eine Empfangsfeldstärke innerhalb eines drahtlosen, hier lokalen Kommunikationsnetzes dar. Dieser Indikator kann von der mobilen Kommunikationseinheit selbst bestimmt werden. Typischerweise ermöglicht die Messung dieses Indikators der mobilen Kommunikationseinheit eine Auswahl eines erreichbaren WLAN-Zugangspunktes und demnach im vorliegenden Fall eine Aussage darüber, wie gut der Empfang eines Signals von dem Zugangspunkt des drahtlosen lokalen Kommunikationsnetzes an der jeweils aktuellen Position der mobilen Kommunikationseinheit ist. Da der RSSI keine festgelegte Einheit hat, wird der Wert abhängig von der jeweiligen Anwendung interpretiert, wobei in der Regel ein höherer Wert einem besseren Empfang des jeweiligen Signals entspricht.

Um ein WLAN-Signal an verschiedenen Positionen in dem die mobile Kommunikationseinheit umgebenden Raum möglichst in Echtzeit sichtbar zu machen, wird erfindungsgemäß eine computer- bzw. rechnergestützte Erweiterung einer Realitätswahrnehmung des die mobile Kommunikationseinheit umgebenden Raum vorgeschlagen. Dabei wird seitens der mobilen Kommunikationseinheit der die mobile Kommunikationseinheit umgebende Raum auf einem Display, in möglicher Ausgestaltung dreidimensional, als Bild bzw. Foto dargestellt und mit dem (dreidimensionalen) Koordinatensystem virtuell überlagert, wobei gemäß dem erfindungsgemäßen Verfahren die Werte der Empfangsqualität an den den jeweiligen Werten der Empfangsqualität zugeordneten Positionen im Raum visuell kenntlich gemacht werden. Dabei können unterschiedliche Werte der Empfangsqualität durch eine jeweils unterschiedliche Farbgebung und/oder durch unterschiedliche Symbole voneinander unterscheidbar dargestellt werden. Eine stufenweise Unterscheidung ist denkbar, wobei bspw. alle in einem ersten Werteintervall liegenden Werte mit einer ersten Farbe und/oder einem ersten Symbol, alle in einem zweiten Werteintervall liegenden Werte mit einer zweiten zu der ersten Farbe unterschiedlichen Farbe und/oder einem zweiten zu dem ersten Symbol unterschiedlichen Symbol usw. dargestellt bzw. angezeigt werden, wobei die jeweiligen Werteintervalle aneinandergrenzend, nicht aber überlappend sind bzw. sein können. Somit sieht ein Nutzer des mobilen Kommunikationsgeräts auf der Anzeige bzw. Display der Kommunikationseinheit eine realitätserweiterte Darstellung des realen Raums, in dem er sich mit der mobilen Kommunikationseinheit befindet, die angereichert ist, um die an den jeweiligen Positionen erwartbare Empfangsqualität, angegeben bspw. in Form einer erwartbaren Signalstärke von Signalen, die über das in dem Raum sich befindende WLAN übermittelt werden, dem Nutzer kenntlich zu machen. Die Darstellung der Werte der Empfangsqualität ist beliebig wählbar bzw. einstellbar und kann bspw. in Form von farbigen Elementen innerhalb des Raumes bzw. innerhalb des Bildes des Raumes an den jeweiligen den jeweiligen Werten zugeordneten Positionen dem Nutzer der mobilen Kommunikationseinheit auf dem Display der mobilen Kommunikationseinheit angezeigt werden. Demnach wird erfindungsgemäß die eingangs genannte Wärmekarte quasi in den die mobile Kommunikationseinheit umgebenen Raum projiziert und zusammen mit dem Raum auf der Anzeigeeinheit als realitätserweiterte Darstellung bspw. in Form eines mit Informationen angereicherten Fotos dargestellt.

Erfindungsgemäß wird zunächst mittels einer auf der mindestens einen mobilen Kommunikationseinheit implementierten Navigationsapplikation die initiale Position der mobilen Kommunikationseinheit in dem die mobile Kommunikationseinheit umgebenen dreidimensionalen Raum ermittelt. Als Navigationsapplikation kann dabei bspw. ARCore® oder ARKit® verwendet werden. Die Navigationsapplikation startet entweder von einem bekannten Ursprung als initialer Position oder ermittelt mit Hilfe von integrierten Sensoren die initiale Position. Wenn die initiale Position der mobilen Kommunikationseinheit in dem Raum ermittelt ist, wird diese als erster Punkt in einem dreidimensionalen Koordinatensystem festgelegt. Das dreidimensionale Koordinatensystem wird dem dreidimensionalen Raum, der die mobile Kommunikationseinheit umgibt, virtuell überlagert. Sodann wird mit der in der mobilen Kommunikationseinheit verbauten Kamera der Zugangspunkt, insbesondere der Router des drahtlosen lokalen Kommunikationsnetzes in einem Bild, insbesondere einem Foto, aufgenommen. Anhand des Bildes wird die Position des Zugangspunktes bzw. des Routers in dem Koordinatensystem berechnet und als zweiter Punkt in dem Koordinatensystem bereitgestellt. Dadurch wird der Router in dem dreidimensionalen Raum quasi verankert. Weiterhin wird an mehreren verschiedenen Positionen der mobilen Kommunikationseinheit, die als weitere Punkte im Koordinatensystem bereitgestellt werden, von der mobilen Kommunikationseinheit ein jeweiliger Wert einer Empfangsqualität von von dem Zugangspunkt durch das drahtlose lokale Kommunikationsnetz an die mobile Kommunikationseinheit gesendeten Signalen gemessen und zusammen mit der jeweiligen Position der mobilen Kommunikationseinheit als jeweiliges Wertepaar in einer Speichereinheit, die vorzugsweise in die mobile Kommunikationseinheit integriert ist und/oder von dieser abrufbar ist, abgespeichert. Durch Berechnung von Entfernung der mobilen Kommunikationseinheit zum Router und einer aktuell an den jeweiligen Positionen durch die mobile Kommunikationseinheit empfangenen Signalstärke kann abgeleitet werden, wie sich das WLAN hinsichtlich dieser Positionen, an welchen tatsächlich Messungen zu der Signalstärke gemacht wurden, ausbreitet. Anhand der gemessenen Wertepaare wird nunmehr von der auf der mobilen Kommunikationseinheit implementierten Auswerteapplikation mittels eines davon umfassten Extrapolationsalgorithmus eine Extrapolation der Werte der Empfangsqualität auf alle weiteren von der Navigationsapplikation erfassbaren Positionen des Raums vorgenommen. Die so extrapolierten Werte der Empfangsqualität werden sodann an den jeweiligen den extrapolierten Werten jeweils zugeordneten Positionen im Raum bzw. in dem Bild des Raumes, das von der Kamera der mobilen Kommunikationseinheit aufgenommen wurde bzw. wird, auf der Anzeigeeinheit der mobilen Kommunikationseinheit dargestellt. Durch die Extrapolation ausgehend von den gemessenen Wertepaaren ist es erfindungsgemäß nicht notwendig, dass die mobile Kommunikationseinheit tatsächlich an den jeweiligen Positionen im Raum war und dort Messungen vorgenommen wurden, sondern diese Positionen können zusammen mit den ihnen jeweils zugeordneten extrapolierten Werten in der realitätserweiterten Darstellung durch bspw. farbliche Markierungen dargestellt werden. Das bedeutet, dass sich der Nutzer nicht zur Bereitstellung aller Wertepaare durch den Raum bewegen muss, sondern lediglich zur Erfassung einiger weniger Wertepaare, die die Extrapolation ermöglichen.

Die zur Erfassung dieser Wertepaare notwendigen Messungen erfolgen vorzugsweise zyklisch im Sekundenbereich im Hintergrund, d. h. ohne dass der Nutzer bei sonstiger Nutzung der mobilen Kommunikationseinheit davon etwas merkt. Bereits bei einer geringen Laufzeit der Applikation entstehen so ausreichend viele Messungen, die eine sinnvolle Vorhersage bzw. Extrapolation erlauben. Vorteilhaft bei Aufnahme der Messungen ist eine gewisse Bewegung des Nutzers und damit der mobilen Kommunikationseinheit durch den Raum bzw. eine gewisse Änderung der Position des Nutzers und damit der mobilen Kommunikationseinheit innerhalb des Raums, um die Genauigkeit der Vorhersage bzw. der Extrapolation zu verbessern.

Wie bereits erwähnt, wird die Empfangsqualität in der Regel durch den von der mobilen Kommunikationseinheit messbaren RSSI dargestellt.

Die Extrapolation wird auf Basis der Annahme durchgeführt, dass die Empfangsqualität, insbesondere die Signalstärke von über das WLAN empfangenen Signalen proportional zu einem Abstand der jeweils empfangenden Position zu dem Zugangspunkt, insbesondere dem Router abnimmt. Die erfindungsgemäß vorgesehene Extrapolation ermöglicht so eine Prognose für eine Abdeckung bzw. Reichweite des drahtlosen lokalen Kommunikationsnetzes, insbesondere des WLANs.

Hierbei basiert die Extrapolation auf nachfolgendem mathematischem Zusammenhang:

$$RSSI = k \cdot \frac{1}{d^m}$$

$$(1)$$

wobei RSSI die jeweils gemessene Empfangsqualität und d einen jeweiligen Abstand zwischen dem Zugangspunkt und der jeweiligen der jeweils gemessenen Empfangsqualität zugeordneten Position der mobilen Kommunikationseinheit angeben und k und m durch eine lineare Regression über einen Algorithmus von RSSI und d bestimmt werden:

$$\log(RSSI) = \log(k) - m \log(d)$$

$$(2)$$

Das bedeutet, dass unter der Annahme, dass die Empfangsqualität, ausgedrückt durch RSSI, mit dem Abstand d zum Router abnimmt, oben genannte Abhängigkeit (1) zwischen RSSI und d angenommen wird, wobei die unbekannten Parameter k und m anhand der gemessenen und gespeicherten Wertepaare und der linearen Regression (2) über den Algorithmus bestimmt bzw. zumindest näherungsweise abgeschätzt werden können. Der Abstand zum Router ergibt sich dabei durch die Bestimmung des Abstandes der durch die Navigationsapplikation bestimmbaren Position des Routers und der jeweiligen Position, an der die Empfangsqualität gemessen wird, innerhalb des Koordinatensystems. Durch die Mehrzahl der bei n Messungen erhaltenen Wertepaare ($RSSI_n$, $d_n$) mit n als ganzer Zahl, können die unbekannten Parameter m und k ermittelt bzw. approximiert werden. Anhand der so approximierten Werte für m und k kann nun die Abhängigkeit zwischen RSSI und d explizit, d. h. als Funktion mit zwei Variablen, nämlich RSSI und d, bspw. f(d) = RSSI, angegeben werden. In dieser Abhängigkeit bzw. mit diesem oben genannten mathematischen Zusammenhang (1) zwischen RSSI und d kann fortan jedem Punkt im Koordinatensystem bzw. jeder Position im Raum, die durch die Navigationsapplikation erfassbar ist und somit deren jeweiliger Abstand zum Router berechenbar ist, exakt eine WLAN-Signalstärke in Form des RSSI zugeordnet werden. Diese der jeweiligen Position zugeordnete Signalstärke kann sodann auf der Anzeigeeinheit bzw. dem Display bzw. dem Bildschirm der mobilen Kommunikationseinheit in der realitätserweiternden Darstellung visualisiert angezeigt werden. Somit kann der funktionale Zusammenhang (1) zwischen RSSI und d explizit angegeben werden, so dass für jede Position I, deren Abstand $d_l$ zum Router bestimmt werden kann und die durch die Navigationsapplikation erfassbar ist, eine erwartbare Empfangsqualität in Form des $RSSI_l$ unmittelbar angegeben bzw. berechnet werden kann.

In weiterer Ausgestaltung werden bei Bewegung der mobilen Kommunikationseinheit durch den Raum kontinuierlich weitere Wertepaare ($RSSI_i$, $d_i$) gemessen. Die Extrapolation der Empfangsqualität auf Basis der kontinuierlich gemessenen Wertepaare kann somit dynamisch verbessert werden. Das bedeutet, dass während einer Anwendung der Auswerteapplikation die Extrapolation aufgrund der kontinuierlich neu gemessenen Wertepaare eine stetige Verbesserung der berechneten und visualisierten WLAN-Signalstärken bereitstellt.

In weiterer Ausgestaltung wird ein Verstärker bzw. Repeater virtuell und/oder real in dem Raum verortet. Dabei wird dessen Auswirkung auf die jeweilige Empfangsqualität bzw. Signalstärke an den jeweiligen Positionen im Raum durch Neuberechnung der jeweiligen Empfangsqualitäten berechnet. Die jeweils resultierende Empfangsqualität bzw. Signalstärke in der realitätserweiterten Darstellung wird an den jeweiligen Positionen im Raum auf der Anzeigeeinheit dargestellt. Das bedeutet, dass die Auswerteeinheit dazu ausgelegt ist, die Auswirkungen eines Repeaters auf die jeweilige Empfangsqualität bzw. Signalstärke an den jeweiligen Positionen im Raum zu berechnen und an den jeweiligen Positionen entsprechend darzustellen. Die Auswerteeinheit prognostiziert demnach eine Veränderung der WLAN-Ausbreitung und stellt diese in Form der realitätserweiterten Darstellung in Echtzeit auf der Anzeigeeinheit der mobilen Kommunikationseinheit dar.

In weiteren Ausgestaltungen werden für den virtuell und/oder real verorteten Repeater in dem Raum real angeordnete Steckdosen identifiziert und auf der Anzeigeeinheit angezeigt, die eine maximal bzw. optimale Wirkung des Repeaters ermöglichen.

Der Repeater selbst darf nicht an einer Stelle im WLAN positioniert werden, wo ein vorgegebener RSSI-Schwellwert unterschritten wird, d. h. wo die Empfangsqualität bzw. die Signalstärke zu schwach ist. Somit wird dem Kunden angezeigt, bis wohin im Raum der Repeater platzierbar ist. Von dort wird mit einer zu der zuvor genannten Berechnung für den Router analogen Berechnung für den Repeater als weiterer Signalquelle die Wirkung des Repeaters in den Raum projiziert. Der Repeater gibt selbst das WLAN-Signal, das er empfängt, verstärkt und/oder aufbereitet, weiter und fungiert demnach quasi als weitere Signalquelle. Die Steckdosen selbst werden über eine Objekterkennung im Raum erfasst und anhand der Lage im Raum als nutzbar oder nicht nutzbar bei Darstellung in der realitätserweiterten Darstellung gekennzeichnet, z. B. durch unterschiedliche Farbgebung (rot, gelb, grün).

Es ist denkbar, dass eine virtuelle Verortung des Repeaters in dem Raum von der Auswerteeinheit genutzt werden kann, um anhand der mittels des Koordinatensystems bestimmbaren Entfernungen zwischen Router, Repeater und einzelnen navigierbaren Positionen im Raum eine erwartbare jeweilige Empfangsqualität an den jeweiligen Positionen zu prognostizieren, ohne dass der Repeater real in dem Raum an verschiedenen Positionen lokalisiert werden muss.

In weiterer Ausgestaltung werden in dem Raum sich real befindende Störfaktoren durch die Auswerteapplikation erkannt und in der realitätserweiterten Darstellung, insbesondere mit einer Darstellung einer jeweiligen durch einen jeweiligen Störfaktor bewirkten Störung auf die Empfangsqualität, angezeigt. Vielen Nutzern ist nicht klar, welche negativen Effekte bspw. ein Schnurlostelefon neben einem Router oder ein Aquarium auf das an einigen Positionen empfangbare WLAN-Signal haben können. Die Auswerteanwendung, die auf der mobilen Kommunikationseinheit implementiert ist, stellt visualisiert dar, inwiefern das WLAN-Signal hinter einem Objekt schlagartig abnimmt oder durch andere Strahlungsquellen im Raum behindert wird. Hierdurch kann der Nutzer Störquellen bzw. Störfaktoren in Form von Objekten und/oder Strahlungsquellen ausmachen und ggf. beheben. Die Anzeige der Störfaktoren in der realtitätserweiterten Darstellung bedeutet bspw., dass neben dem Störfaktor selbst als Objekt in dem Bild des Raumes auch die jeweiligen Empfangsqualitäten an den jeweiligen navigierbaren Positionen in dem Raum bzw. in dem Bild des Raums farblich dargestellt werden und somit ein wellenartiges Netz, das dem Raum überlagert ist, bilden. Sind nun Störfaktoren vorhanden, so kann dies durch bspw. eine talförmige Darstellung in der ansonsten regelmäßig wellenförmigen Darstellung der WLAN-Ausbreitung angezeigt werden. In anderen alternativen oder ergänzenden Darstellungen kann bspw. an Stellen von Störfaktoren die Farbgebung/-intensität abnehmen oder sich grundsätzlich z. B. von grün zu rot ändern. Neben der Farbgebung sind durch 3D-Objekte, die mittels Realitätserweiterung (Augmented Reality - AR) in dem Raum visualisiert werden, jegliche Formgebungen denkbar, die eine gute oder schlechte Signalstärke vermitteln können.

In weiterer Ausgestaltung des erfindungsgemäßen Verfahrens ist die Auswerteapplikation dazu ausgelegt, mindestens einen Vorschlag zu einer Optimierung der Empfangsqualität an mindestens einer Position in dem Raum anzuzeigen. Insbesondere im Hinblick auf Störfaktoren bzw. auf an bestimmten Positionen im Raum sich befindenden Störquellen kann angezeigt werden, wie diese Störfaktoren bzw. Störquellen zu beseitigen bzw. zu minimieren sind.

In weiterer Ausgestaltung des erfindungsgemäßen Verfahrens werden durch die Kamera der mobilen Kommunikationseinheit an das lokale Kommunikationsnetz angebundene Geräte visuell erkannt, mit der Navigationsapplikation geortet und durch die Auswerteapplikation als Teil des lokalen Kommunikationsnetzes identifiziert und in der realitätserweiterten Darstellung, insbesondere zusammen mit zusätzlichen Geräteinformationen, angezeigt. Das bedeutet, dass unmittelbar in der Darstellung des Raumes nicht nur die real vorhandenen Geräte angezeigt werden, sondern auch deren Ankopplung an das lokale Kommunikationsnetz und ggf. weitere Informationen zu dem jeweiligen Gerät.

In weiterer Ausgestaltung des erfindungsgemäßen Systems werden die zusätzlichen Geräteinformationen, die auf der Anzeige der mobilen Kommunikationseinheit zur Anzeige kommen, anhand von über UPnP von den jeweiligen Geräten ausgelesenen Daten ermittelt. UPnP steht dabei für Universal Plug and Play und dient generell zu einer herstellerübergreifenden Ansteuerung von Geräten, insbesondere von Audiogeräten, Druckern und Haussteuerungen, über ein IPbasiertes Netzwerk. Im hier genannten Fall wird UPnP dazu genutzt, aus den jeweiligen Geräten Daten auszulesen und zur Anzeige auf der Anzeigeeinheit der mobilen Kommunikationseinheit bereitzustellen. Bei den zusätzlichen Geräteinformationen kann es sich insbesondere um Informationen zur Konnektivität des jeweiligen Geräts, um einen Gerätenamen oder einen Gerätetyp handeln.

In noch weiterer Ausgestaltung des erfindungsgemäßen Verfahrens wird auf Basis einer jeweils festgestellten Verortung eines jeweiligen Geräts an einer jeweiligen Position im Raum von der Auswerteapplikation eine Neupositionierung des jeweiligen Geräts vorgeschlagen und angezeigt, falls von der Auswerteapplikation erkannt wird, dass die Empfangsqualität des jeweiligen Geräts an einer anderen Position im Raum höher ist. D. h. dass durch die bereitgestellten Informationen seitens der Auswerteapplikation auf der mobilen Kommunikationseinheit zielgerichtete Verbesserungsvorschläge gegeben werden können. Lediglich als Beispiel dient die voranstehend genannte Neupositionierung des jeweiligen Geräts. Die Auswerteanwendung erkennt, dass das WLAN-Signal an einer anderen Stelle im Raum besser ist und schlägt dem Nutzer vor, das Gerät dort zu platzieren. In einfachen Schritten kann der Nutzer das WLAN-Signal für das entsprechende Gerät durch Umpositionierung optimieren.

In weiterer Ausgestaltung des erfindungsgemäßen Verfahrens wird für den Fall, dass als Zugangspunkt ein Hybrid-Router oder ein reiner LTE-Router verwendet wird, neben der jeweiligen Empfangsqualität von von dem Zugangspunkt durch das drahtlose lokale Kommunikationsnetz an eine jeweilige von der Navigationsapplikation erfassbare Position des Raums gesendeten Signalen auch eine jeweilige Empfangsqualität von von dem Zugangspunkt an die jeweiligen von der Navigationsapplikation erfassbaren Position des Raums gesendeten LTE-Signalen bestimmt und angezeigt. So kann ein Nutzer erkennen, wo der Zugangspunkt, insbesondere der Router, noch ausreichend guten LTE-Empfang bekommt und wie sich sein WLAN im Raum ausbreitet. Somit kann der Router optimal im Raum platziert werden, um ein ausreichendes LTE-Signal zu empfangen und eine gute WLAN-Abdeckung des Raums zu erzielen. Dies ist von besonderer Bedeutung, da bei Nutzung von Hybrid- oder reinen LTE-Routern darauf zu achten ist, dass diese zweifach für Funksignale optimiert werden müssen. Damit der LTE-Empfang möglichst gut ist, sollte der Router in der Nähe von Fenstern platziert sein, da LTE-Wellen durch Wände stark abgeschwächt werden können. Die Platzierung am Rand einer Wohneinheit bzw. des Raums wirkt sich allerdings negativ auf die Ausbreitung des WLAN-Signals des Routers im Inneren des Raums aus. Durch die erfindungsgemäße Visualisierung sowohl des LTE-Signals wie auch der WLAN-Abdeckung kann seitens eines Nutzers der Hybrid- oder reine LTE-Router optimal im Raum platziert werden, um sowohl das LTE-Signal ausreichend zu erhalten als auch die WLAN-Abdeckung zufriedenstellend zu erzielen.

Wie bereits voranstehend erwähnt, wird die Empfangsqualität in der Regel über den Received Signal Strength Indicator (RSSI) bestimmt. Der RSSI ist ein Indikator für die Empfangsqualität für drahtlose Kommunikation, wie bspw. dem WLAN, welcher im Standard IEEE 802.11 definiert wird. Dabei handelt es sich um eine (negative) Zahl. Je besser die Empfangssignalstärke ist, umso mehr ist der RSSI an Null. Der RSSI wird vom mobilen Endgerät, d. h. der mobilen Kommunikationseinheit gemessen und durch eine API (Application Programming Interface) von einem auf der mobilen Kommunikationseinheit implementierten mobilen Betriebssystem zum Auslesen zur Verfügung gestellt.

Es ist weiterhin vorgesehen, dass, um die Genauigkeit der Prognose bzw. der Extrapolation zu erhöhen, regelmäßig ein Speedtest durchgeführt wird, dessen Ergebnis zusätzlich in die Berechnung der Empfangsqualität, insbesondere der WLAN-Signalstärke einfließt. Der Speedtest lastet durch multiple, parallellaufende Downloads das WLAN aus und berechnet nutzerseitig, aufgrund der Anzahl der eingetroffenen Bits und der dafür benötigten Zeit, eine jeweilige Bandbreite. Sollte die Internetanbindung einen Engpass bilden und es somit nicht zu einer maximalen Auslastung der WLAN-Verbindung kommen, werden die gemessenen Werte für die Berechnung nicht berücksichtigt. Gerade bei einer Umsetzung für iOS® der Firma Apple® wird der Speedtest eine maßgebliche Rolle spielen, da der Zugriff auf den RSSI nur mit expliziter Erlaubnis seitens Apple® geschehen kann.

Bei Nutzung der Auswerteapplikation auf der mobilen Kommunikationseinheit wird in regelmäßigen Abständen der RSSI in Verbindung mit der jeweils aktuellen Position des Nutzers bzw. der von ihm gehaltenen mobilen Kommunikationseinheit gespeichert. Wie voranstehend erwähnt, werden sowohl die initiale Position der mobilen Kommunikationseinheit im Raum als auch sich daran anschließend die jeweiligen Positionen der mobilen Kommunikationseinheit, an denen Messungen stattfinden, durch die in der mobilen Kommunikationseinheit implementierte Navigationsapplikation erfasst. Bei der Navigationsapplikation kann es sich dabei um die Augmented Reality SDKs (Software Development Kit) ARCore® bzw. ARKit® handeln. Die so erfassten Positionen werden als jeweilige Punkte in einem dreidimensionalen Koordinatensystem bereitgestellt, das dem realen Raum überlagert wird. Weiterhin wird durch die Kamera der mobilen Kommunikationseinheit der Zugangspunkt für den Router gescannt, damit die Navigationsapplikation die Position des Routers in jenem Koordinatensystem erfassen kann. Dadurch wird der Router in dem Koordinatensystem verankert. Für die Extrapolation wird nun angenommen, wie voranstehend erläutert, dass die Empfangsqualität des elektromagnetischen Feldes RSSI proportional zum (potenzierten) Abstand d zur Quelle, also zum Router abnimmt:

$$RSSI \ = k \ \cdot \ \frac{1}{d^m}$$

$$(1)$$

Hier sind k und m die zu bestimmenden Parameter. Hieraus folgt durch eine lineare Regression über den Algorithmus der Werte RSSI und d:

$$\log(RSSI) = \log(k) - m \log(d)$$

$$(2)$$

RSSI und d sind Werte, die mittels Sensoren und der Navigationsapplikation gemessen und als Wertepaar abgespeichert werden. Durch die lineare Regression werden von der Auswerteapplikation approximierte Werte für m und k ermittelt, mit denen nun der funktionale Zusammenhang zwischen RSSI und d explizit bestimmt werden kann. Mit dieser Funktion bzw. diesem funktionalen Zusammenhang kann nun jedem Punkt im Koordinatensystem bzw. jeder Position im Raum, der durch das AR-SDK bzw. die Navigationsapplikation erfasst wird und somit dessen Abstand zum Router berechnet werden kann, eine WLAN-Signalstärke zugeordnet werden, was auf der Anzeigeeinheit bzw. dem Bildschirm/Display der mobilen Kommunikationseinheit in der realitätserweiterten Darstellung visualisiert dargestellt wird. Durch die kontinuierliche Messung weiterer Wertepaare erhält die Extrapolation während der Anwendung der Auswerteapplikation eine stetige Verbesserung der berechneten und visualisierten WLAN-Signalstärke an jeweiligen Positionen im Raum.

Die vorliegende Erfindung betrifft ferner eine mobile Kommunikationseinheit mit einer Kamera, die dazu konfiguriert ist, einen Zugangspunkt des drahtlosen lokalen Kommunikationsnetzes in einem Bild, insbesondere Foto, aufzunehmen, mit einer auf der mobilen Kommunikationseinheit implementierten Navigationsapplikation, die dazu konfiguriert ist, eine initiale Position der mobilen Kommunikationseinheit in einem die mobile Kommunikationseinheit umgebenden dreidimensionalen realen Raum zu ermitteln und als ersten Punkt in einem dreidimensionalen Koordinatensystem, das dem Raum überlagert wird, bereitzustellen, und anhand des Bildes, insbesondere des Fotos, eine Position des Zugangspunkts in dem Koordinatensystem zu berechnen und als zweiten Punkt in dem Koordinatensystem bereitzustellen, mit mindestens einem Sensor, der dazu ausgelegt ist, an einer Mehrzahl von verschiedenen Positionen der mobilen Kommunikationseinheit in dem die mobile Kommunikationseinheit umgebenen Raum, die jeweils von der Navigationsapplikation als weiterer Punkt in dem Koordinatensystem bereitzustellen sind, einen jeweiligen Wert einer Empfangsqualität von von dem Zugangspunkt durch das drahtlose lokale Kommunikationsnetz an die mobile Kommunikationseinheit gesendeten Signalen zu messen und zusammen mit der jeweiligen Position der mobilen Kommunikationseinheit als jeweiliges Wertepaar in einem Datenspeicher abzuspeichern, mit dem Datenspeicher, mit einer auf der mindestens einen mobilen Kommunikationseinheit implementierten Auswerteapplikation, die dazu konfiguriert ist, auf Basis der gemessenen Wertepaare eine Extrapolation der Werte der Empfangsqualität auf alle von der Navigationsapplikation erfassbaren Positionen des Raums und somit auf den Positionen jeweils zugeordnete Punkte des Koordinatensystems vorzunehmen und mit einer Anzeigeeinheit, die dazu konfiguriert ist, den Raum zusammen mit den Werten der Empfangsqualität an den den jeweiligen Werten zugeordneten Positionen, in möglicher Ausgestaltung dreidimensional, als realitätserweiterte Darstellung anzuzeigen.

Bei der mobilen Kommunikationseinheit handelt es sich in Ausgestaltung um ein Smartphone, ein Laptop, ein PDA oder ein anderweitig entsprechend konfiguriertes mobiles Kommunikationsgerät.

In Ausgestaltung ist das drahtlose lokale Kommunikationsnetz ein lokales Funknetz, insbesondere ein WLAN.

In weiterer Ausgestaltung ist der Zugangspunkt zu dem lokalen Kommunikationsnetz ein Router, bspw. ein Hybrid- oder ein reiner LTE-Router.

Erfindungsgemäß ist die Auswerteapplikation dazu ausgelegt, die jeweilige Empfangsqualität durch Messung eines jeweiligen Received Signal Strength Indicators zu messen. Weiterhin ist die Auswerteapplikation dazu ausgelegt, die Extrapolation basierend auf nachfolgendem mathematischem Zusammenhang vorzunehmen:

$$RSSI = k \cdot \frac{1}{d^m},$$

$$(1)$$

wobei RSSI die jeweils gemessene Empfangsqualität und d einen jeweiligen Abstand zwischen dem Zugangspunkt und der jeweiligen der jeweils gemessenen Empfangsqualität zugeordneten Position der mobilen Kommunikationseinheit angeben und k und m durch eine lineare Regression über ein Logarithmus von RSSI und d bestimmt werden:

$$\log(RSSI) = \log(k) - m \log(d)$$

$$(2)$$

Ferner ist in weiterer Ausgestaltung die mobile Kommunikationseinheit dazu ausgelegt, bei Bewegung der mobilen Kommunikationseinheit durch den Raum kontinuierlich Wertepaare (RSSI, d) zu messen und die Extrapolation der Empfangsqualität auf Basis der kontinuierlich gemessenen Wertepaare dynamisch zu verbessern.

In noch weiterer Ausgestaltung der erfindungsgemäßen mobilen Kommunikationseinheit ist die Auswerteapplikation dazu ausgelegt, in dem Raum sich real befindende Störfaktoren zu erkennen und in der realitätserweiterten Darstellung, insbesondere mit einer Darstellung einer jeweiligen durch einen jeweiligen Störfaktor bewirkten Störung auf die Empfangsqualität, mittels der Anzeigeeinheit anzuzeigen und insbesondere ein Vorschlag zu einer Optimierung der Empfangsqualität an mindestens einer Position in dem Raum anzuzeigen.

Die Navigationsapplikation und die Auswerteapplikation können in einer gemeinsamen Navigations-/Auswerteapplikation fusioniert bzw. zusammengeführt sein.

In noch weiterer Ausgestaltung ist die mobile Kommunikationseinheit dazu konfiguriert, an das lokale Kommunikationsnetz angebundene Geräte durch die Kamera visuell zu erkennen, mit der Navigationsapplikation zu orten und durch die Auswerteapplikation als jeweiligen Teil des lokalen Kommunikationsnetzes zu identifizieren und in der realitätserweiterten Darstellung, insbesondere zusammen mit zusätzlichen Geräteinformationen, anzuzeigen.

In noch weiterer Ausgestaltung der erfindungsgemäßen mobilen Kommunikationseinheit ist diese dazu konfiguriert, auf Basis einer jeweils festgestellten Verortung eines jeweiligen Geräts an einer jeweiligen Position im Raum durch die Auswerteapplikation eine Neupositionierung des jeweiligen Geräts vorzuschlagen und anzuzeigen, falls von der Auswerteapplikation erkannt wird, dass die Empfangsqualität für das jeweilige Gerät an einer anderen Position im Raum höher ist.

Weiterhin kann die mobile Kommunikationseinheit dazu ausgelegt sein, für den Fall, dass als Zugangspunkt ein Hybrid-Router oder ein reiner LTE-Router verwendet wird, neben der jeweiligen Empfangsqualität von von dem Zugangspunkt durch das drahtlose lokale Kommunikationsnetzt an die jeweiligen von der Navigationsapplikation erfassbaren Positionen des Raums gesendeten Signalen auch eine jeweilige Empfangsqualität von an die jeweiligen von der Navigationsapplikation erfassbaren Positionen des Raums gesendeten LTE-Signalen zu bestimmen und anzuzeigen.

Ferner betrifft die vorliegende Erfindung ein Computerprogrammprodukt mit einem Computerprogramm mit Programmcodemitteln, die dazu ausgelegt sind, wenn das Computerprogramm auf einer Recheneinheit, insbesondere auf einer mobilen Kommunikationseinheit, wie voranstehend beschrieben, ausgeführt wird, ein Verfahren wie voranstehend beschrieben auszuführen.

Die realitätserweiterte Darstellung, die in möglicher Ausgestaltung dreidimensional ist, wird erfindungsgemäß ausgehend von einem mittels der Kamera aufgenommenen Bildes bzw. Fotos, insbesondere einer digitalen Fotografie, des Raums live bzw. in Echtzeit erzeugt. Der von der Kamera erfasste Raum wird zur Erzeugung eines kontinuierlich, insbesondere in Echtzeit aktualisierten Raumbildes bzw. Fotos genutzt. Im Falle eines Wohnraums oder einer Wohnung wird dadurch ein, in Ausgestaltung dreidimensionales, Bild bzw. Foto des Wohnraums bzw. der Wohnung hinterlegt. Ferner wird in einem ersten Schritt aus dem Raumbild mittels der Kamera ein Router detektiert und die Position des Routers in dem Raum bestimmt. Ferner werden an einigen Positionen im Raum Messungen zur Empfangsqualität von von dem Router durch das lokale Kommunikationsnetz empfangenen Signalen gemacht und als Wertepaare (Empfangsqualität/Signalstärke, Position) bzw. (RSSI, d), wobei d ein jeweiliger Abstand zum Router ist, hinterlegt. Anhand dieser gemessenen Wertepaare ist es, wie voranstehend erläutert, möglich, einen mathematischen Zusammenhang zwischen Empfangsqualität und Entfernung einer jeweiligen Position zum Router explizit anzugeben, d. h. in Abhängigkeit der räumlichen Entfernung zwischen einer jeweiligen Position im Raum zu der Position des Routers ist eine jeweilige WLAN-Signalstärke an dieser jeweiligen Position bestimmbar. Eine derart bestimmte WLAN-Signalstärke für eine jeweilige Position im Raum ist erfindungsgemäß in dem kontinuierlich aktualisierten Raumbild bzw. Foto darstellbar. Die Darstellung kann dabei mittels eines Farbschematas erfolgen, um bspw. unterschiedliche Zustände/Werte der Empfangsqualität/Signalstärke auf der Anzeigeeinheit unterscheidbar zu visualisieren. Dabei kann zumindest ein erster Zustand/Wert einer Signalstärke "Signalstärke schwach" mit einer ersten Farbe visualisiert werden und zumindest ein zweiter Zustand/Wert "Signalstärke stark" mit einer zweiten Farbe visualisiert werden. Ferner kann eine Darstellung mittels einer Prozentanzeige "Ring" erfolgen, wobei ein Ring komplett gefüllt 100 % entspricht und weniger gefüllt entsprechend weniger Prozent, analog zu gängigen Darstellungen von Speedtests oder Datenvolumen.

Des Weiteren kann durch die erfindungsgemäß vorgesehene Kamera ein Störobjekt detektiert und in dem auf der Anzeige dargestellten Raumbild bzw. der realitätserweiterten Darstellung bspw. farbig markiert werden.

Ferner ist es denkbar, mit Hilfe der Auswerteapplikation einen zweiten oder weiteren Router und eine zweite oder weitere Router-Position zu bestimmen und die WLAN-Signalstärke in Abhängigkeit der beiden oder weiteren Router festzustellen.

Weitere Vorteile und Ausgestaltungen der Erfindung ergeben sich aus der Beschreibung und der beiliegenden Zeichnung.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand von Ausführungsbeispielen in der Zeichnung schematisch dargestellt und wird im Folgenden unter Bezugnahme auf die Zeichnung ausführlich beschrieben.

Figur 1 zeigt anhand eines Flussdiagramms einen Ablauf einer Ausführungsform des erfindungsgemäßen Verfahrens.

Figur 2 zeigt in schematischer Darstellung einen mittels einer Ausführungsform des erfindungsgemäßen Verfahrens visualisierten Abdeckungsbereich eines drahtlosen lokalen Kommunikationsnetzes.

Figur 3 zeigt in schematischer Darstellung eine mittels einer weiteren Ausführungsform des erfindungsgemäßen Verfahrens berechnete Visualisierung des Abdeckungsbereichs eines drahtlosen lokalen Kommunikationsnetzes innerhalb eines Wohnraums.

Figur 4 zeigt eine zu Figur 3 alternative Visualisierung des Abdeckungsbereichs des drahtlosen lokalen Kommunikationsnetzes durch eine weitere Ausführungsform des erfindungsgemäßen Verfahrens.

Figur 5 zeigt eine Darstellung eines gemäß einer noch weiteren Ausführungsform des erfindungsgemäßen Verfahrens erkannten Geräts innerhalb eines Abdeckungsbereichs eines drahtlosen lokalen Kommunikationsnetzes.

Figur 6 zeigt den in Figur 2 in schematischer Darstellung gezeigten visualisierten Abdeckungsbereich eines drahtlosen lokalen Kommunikationsnetzes als Foto bzw. realitätserweiterte Darstellung, wie sie auf einer Anzeigeeinheit dargestellt werden kann.

Figur 7 zeigt die in Figur 3 in schematischer Darstellung gezeigte berechnete Visualisierung des Abdeckungsbereichs eines drahtlosen lokalen Kommunikationsnetzes innerhalb eines Wohnraums als Foto bzw. als realitätserweiterte Darstellung, wie sie auf einer Anzeigeeinheit darstellbar ist.

Figur 8 zeigt die in Figur 4 in schematischer Darstellung gezeigte alternative Visualisierung des Abdeckungsbereichs des drahtlosen lokalen Kommunikationsnetzes ebenfalls in Form einer Fotografie bzw. einer realitätserweiterten Darstellung, wie sie auf einer Anzeigeeinheit bzw. einem Display darstellbar ist.

Figur 9 zeigt die in Figur 5 schematisch dargestellte Anzeige eines erkannten Geräts innerhalb eines Abdeckungsbereichs eines drahtlosen lokalen Kommunikationsnetzes als Fotografie bzw. als realitätserweiterte Darstellung, wie sie auf einer Anzeigeeinheit, bspw. eines Smartphones, darstellbar ist.

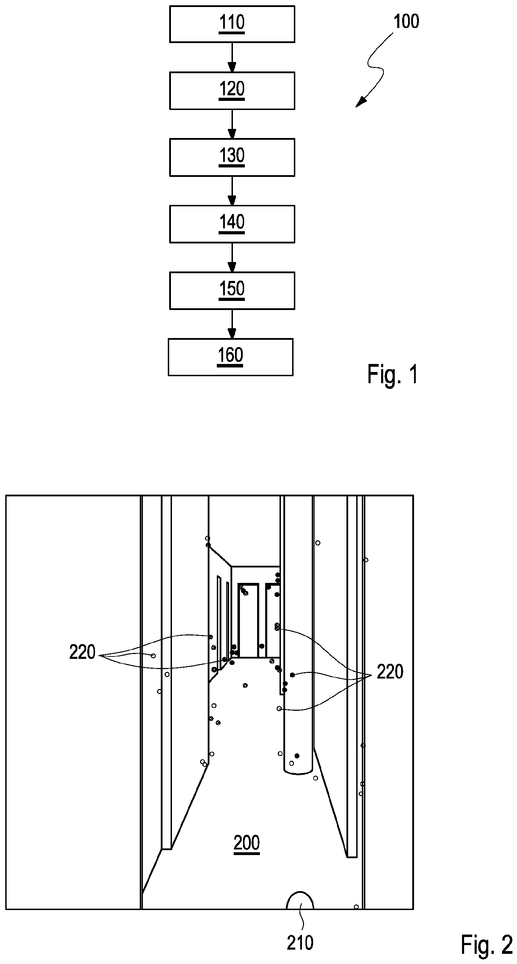

Figur 1 zeigt ein vereinfachtes Flussdiagramm einer Ausführungsform des erfindungsgemäßen Verfahrens zur Visualisierung eines Abdeckungsbereichs eines drahtlosen lokalen Kommunikationsnetzes mittels einer mobilen Kommunikationseinheit. Bei dem drahtlosen lokalen Kommunikationsnetz handelt es sich vorzugsweis um ein WLAN, wie es bspw. in einem beliebigen Wohnraum und/oder innerhalb eines Gebäudes installiert sein kann.

Zur Visualisierung des WLANs mittels einer mobilen Kommunikationseinheit, wie bspw. eines Smartphones, wird gemäß der hier vorgestellten Ausführungsform des erfindungsgemäßen Verfahrens in einem Schritt 110 zunächst mittels einer auf der mindestens einen mobilen Kommunikationseinheit implementierten Navigationsapplikation eine initiale Position, d. h. eine Anfangsposition, der mobilen Kommunikationseinheit in einem die mobile Kommunikationseinheit umgebenden dreidimensionalen realen Raum, insbesondere in einem Wohnraum, ermittelt und als erster Punkt in einem dreidimensionalen Koordinatensystem bereitgestellt. Das dreidimensionale Koordinatensystem wird dabei dem real existierenden Raum, insbesondere dem Wohnraum, virtuell überlagert.

In einem nachfolgenden Schritt 120 wird ein Zugangspunkt des drahtlosen lokalen Kommunikationsnetzes, bspw. ein Router eines WLANs, mittels einer Kamera der mobilen Kommunikationseinheit, insbesondere eines Smartphones, in einem Bild aufgenommen. Anhand des aufgenommenen Bildes wird von der Navigationsapplikation eine Position des Routers in dem dreidimensionalen realen Raum berechnet und als zweiter Punkt in dem Koordinatensystem bereitgestellt. Somit stellt der Router bzw. dessen Position im Raum eine Art Ankerpunkt für das den Raum zu überlagernde Koordinatensystem sowie für den zu visualisierenden Abdeckungsbereich des WLANs innerhalb des dreidimensionalen realen Raums, d. h. des Wohnraums, dar. Der zweite Punkt in dem Koordinatensystem, welcher den Zugangspunkt, d. h. dem Router, zugeordnet wird, kann bspw. als Ursprung des Koordinatensystems gewählt werden.

In einem nachfolgenden Schritt 130 wird sodann an einer Mehrzahl von verschiedenen Positionen der mobilen Kommunikationseinheit in dem die mobile Kommunikationseinheit umgebenden Raum, d. h. innerhalb des Wohnraums, die jeweils von der Navigationsapplikation als weitere Punkte in dem Koordinatensystem bereitgestellt werden, von der mobilen Kommunikationseinheit, d. h. von dem Smartphone, ein jeweiliger Wert einer Empfangsqualität, bspw. durch Messung des RSSI, von von dem Zugangspunkt, d. h. dem Router, durch das drahtlose lokale Kommunikationsnetz, d. h. das WLAN, an die mobile Kommunikationseinheit, d. h. das Smartphone, gesendeten Signalen gemessen und zusammen mit der jeweiligen Position der mobilen Kommunikationseinheit als jeweiliges Wertepaar abgespeichert. Demnach sind nun Wertepaare jeweils gebildet aus einem Wert der Empfangsqualität und einer diesem Wert der Empfangsqualität zugeordneten Position innerhalb des realen Raums, entsprechend einem jeweiligen Punkt innerhalb des dem Raum überlagerten Koordinatensystems, abgespeichert. Das bedeutet, dass einer jeweiligen von der Navigationsapplikation erfassten Position innerhalb des Wohnraums, in welchem sich die mobile Kommunikationseinheit zur Messung befindet, ein gemessener Wert der Empfangsqualität, bspw. in Form des RSSI, zugeordnet und als Messpaar bzw. als Wertepaar hinterlegt wird. Demnach ist auf einer Datenbank eine Mehrzahl von Wertepaaren hinterlegt, wobei die Datenbank bspw. Teil der mobilen Kommunikationseinheit darstellt oder zumindest für die mobile Kommunikationseinheit zugänglich ist bzw. mit dieser in einer kommunikativen Verbindung steht.

In einem nachfolgenden Schritt 150 wird von einer auf der mindestens einen mobilen Kommunikationseinheit implementierten Auswertapplikation auf Basis der gemessenen und hinterlegten Wertepaare eine Extrapolation der Werte der Empfangsqualität auf alle von der Navigationsapplikation erfassbaren Positionen des Raums und somit auf den Positionen jeweils zugeordnete Punkte des Koordinatensystems vorgenommen. Das bedeutet, dass die jeweilig gemessenen Werte der Empfangsqualität an den jeweiligen den jeweilig gemessenen Werten der Empfangsqualität zugeordneten Positionen innerhalb des Raums auf alle von der Navigationsapplikation erfassbaren Positionen des Raums extrapoliert werden, sodass letztlich für alle Positionen des Raums, die von der Navigationsapplikation erfassbar sind, ein jeweiliger Wert für die Empfangsqualität zur Verfügung steht. In der Regel ist jede Position innerhalb des Raums, welche die mobile Kommunikationseinheit umgibt, durch die auf der mobilen Kommunikationseinheit implementierte Navigationsapplikation erfassbar. Somit ergibt sich ein kontinuierlicheres Bild von Positionen im Raum und diesen Positionen jeweils zugeordneten Werten der Empfangsqualität, was sich in einem Schaubild bzw. in einer realitätserweiterten Darstellung des Raumes durch kontinuierlich (dreidimensional) darstellbare Kurvenverläufe visualisieren und auf einer Anzeigeeinheit der mobilen Kommunikationseinheit anzeigen lässt.

In einem weiteren Schritt 160 wird letztlich auf der Anzeigeeinheit der mobilen Kommunikationseinheit der Raum zusammen mit den Werten der Empfangsqualität an den den jeweiligen Werten zugeordneten Positionen als realitätserweiterte Darstellung angezeigt. Das bedeutet, dass bspw. auf einem Display der mobilen Kommunikationseinheit, bspw. eines Smartphones, der real existierende Raum als Bild bzw. Foto bzw. Fotografie dargestellt wird, dem eine Darstellung der jeweiligen Werte der Empfangsqualität an jeweiligen einer den jeweiligen Werten zugeordneten Positionen innerhalb des Raums überlagert ist. Die Darstellung der jeweiligen Werte der Empfangsqualität an den den jeweiligen Werten zugeordneten Positionen kann dabei wahlweise farbig, durch spezifische Muster oder anderweitig ausgestaltet bzw. realisiert sein bzw. werden. Das bedeutet, dass die Darstellung der Empfangsqualität an den den jeweiligen Werten der Empfangsqualität zugeordneten Positionen als virtuelle Darstellung dem Bild des real existierenden dreidimensionalen Raums überlagert wird und somit einer realitätserweiterten Darstellung entspricht, d. h. einer Augmented Reality. Die Möglichkeiten zur Darstellung der Empfangsqualität an den den jeweiligen Werten der Empfangsqualität zugeordneten Positionen im Raum sind bspw. in den Figuren 2 bis 4 und 6 bis 8 gezeigt.

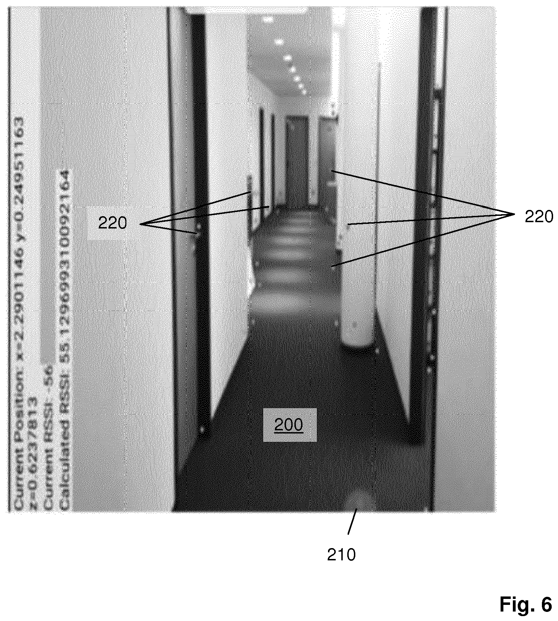

Figur 2 zeigt in schematischer Form eine mögliche Darstellung einer Visualisierung eines prognostizierten Abdeckungsbereichs eines drahtlosen lokalen Kommunikationsnetzes mittels einer mobilen Kommunikationseinheit. Dargestellt ist als die mobile Kommunikationseinheit umgebender Raum ein Flur 200 innerhalb eines Wohnraums bzw. einer Wohnung, gekennzeichnet durch eine Mehrzahl von seitlich angeordneten Türen zu dahinterliegenden Räumen, wobei der Flur 200 selbst sich entlang der Türen erstreckt. In Figur 2 ist die Extrapolation von Werten einer Empfangsqualität bzw. einer WLAN-Signalstärke innerhalb des Flurs 200 dargestellt. Der Zugangspunkt bzw. der Router 210 befindet sich hierbei rechts unten in der schematischen Darstellung eines von der Kamera der mobilen Kommunikationseinheit erfassten Bildes bzw. Fotos (siehe Figur 6) und wurde von der Navigationsapplikation in dem Bild bzw. Foto zunächst erkannt und lokalisiert. Anhand von erfassten Randbedingungen und gemessener Werte der Empfangsqualität innerhalb des Raums bzw. Flurs 200 wird eine Ausbreitung der Empfangsqualität bzw. der WLAN-Signalstärke innerhalb des Raums 200 durch bspw. farblich markierte, hier runde Objekte 220 dargestellt. Es ist an der Farbgebung von bspw. gelb nach rot, hier in der schematischen Darstellung von unausgefüllten Punkten über teilweise gefüllte Punkte bis ausgefüllten Punkten, mit abnehmender Signalstärke bzw. Empfangsqualität zu erkennen, wie die WLAN-Signalstärke zum Ende des Flurs 200 immer weiter abnimmt. Somit ermittelt die Auswerteapplikation, die auf dem mobilen Kommunikationsgerät implementiert ist, die WLAN-Signalstärke an den verschiedenen von der Navigationsapplikation erfassbaren Positionen innerhalb des Raums, ohne dass sich ein Nutzer der mobilen Kommunikationseinheit mit der mobilen Kommunikationseinheit durch den Raum, hier den Flur 200, bewegen muss. Sobald sich der Nutzer zusammen mit der mobilen Kommunikationseinheit durch den Raum, hier den Flur 200, bewegt, werden mit Hilfe der mobilen Kommunikationseinheit Messdaten an den jeweiligen von den mobilen Kommunikationseinheit eingenommenen Positionen innerhalb des Raums erhoben und mit der Prognose bzw. der Extrapolation, die durch die Auswerteapplikation der mobilen Kommunikationseinheit vorgenommen wurde, abgeglichen. Die kontinuierlich aufgenommenen Messdaten dienen dem Vergleich mit der vorhergesagten Ausbreitung des lokalen drahtlosen Kommunikationsnetzes. Dadurch kann die Prognose bzw. die jeweilige von dem Extrapolationsalgorithmus der Auswerteapplikation berechnete Empfangsqualität in Form der WLAN-Signalstärke an den jeweiligen Positionen im Raum angepasst und somit in Echtzeit verbessert werden. Die auf der Anzeigeeinheit der mobilen Kommunikationseinheit gezeigte realitätserweiterte Darstellung wird in Echtzeit fortlaufend aktualisiert.

Durch eine Visualisierung des Abdeckungsbereichs des WLANs auf einer Anzeigeeinheit der mobilen Kommunikationseinheit ist es für einen Kunden der mobilen Kommunikationseinheit ersichtlich, an welchen Stellen das WLAN-Signal im Raum besonderes gut oder besonders schlecht ist. Dadurch werden Ursachen für Probleme für den Nutzer nachvollziehbar.

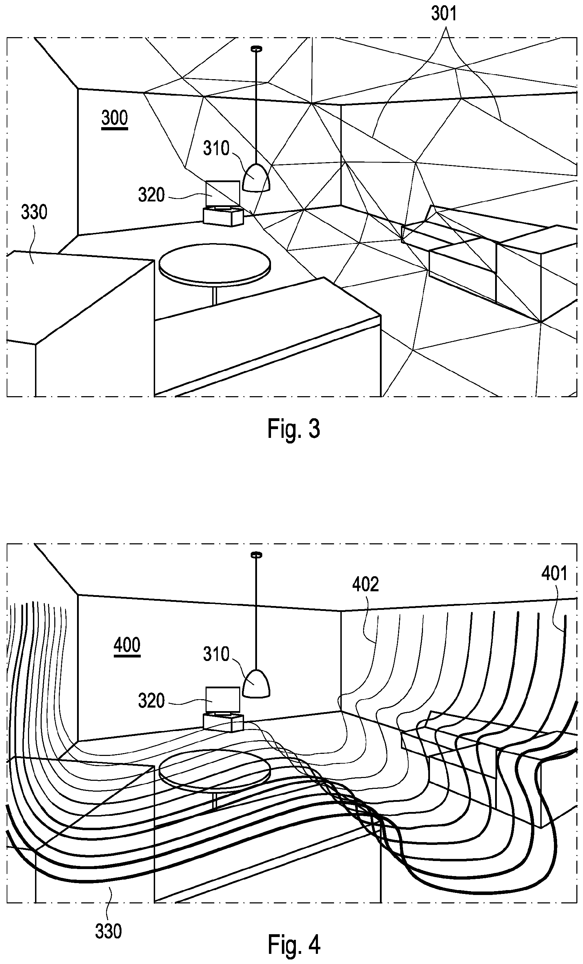

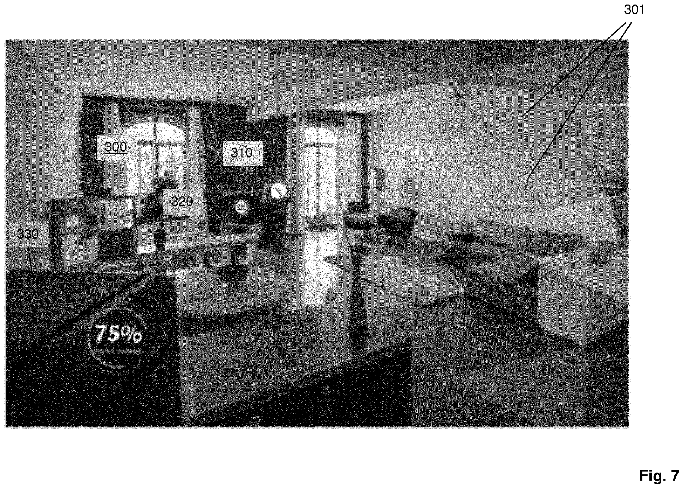

Figur 3 zeigt ein weiteres Beispiel eines eine mobile Kommunikationseinheit umgebenden Raums 300 in Form eines, hier schematisch dargestellten, Wohnraums, insbesondere eines Wohnzimmers. Innerhalb des Wohnraums 300 sind mehrere Geräte dargestellt, die potentielle Störfaktoren für die Ausbreitung bzw. für den Abdeckungsbereich des drahtlosen lokalen Kommunikationsnetzes innerhalb des Wohnraums 300 sein können. Beispielhaft seien hier ein Kühlschrank 330, ein Fernsehgerät 320 und eine Deckenleuchte 310 genannt. Diese Störfaktoren werden durch die Auswerteapplikation erkannt und können ebenfalls innerhalb der Darstellung des Abdeckungsbereichs des WLANs dargestellt werden. Das bedeutet, dass sie innerhalb des Raums, der mittels der Kamera erfasst und als Bild bzw. Foto (siehe Figur 7) dargestellt wird, als Störfaktoren identifiziert und auch als solche dargestellt und ggf. mit zusätzlichen Informationen versehen werden können. Die Auswerteapplikation stellt visualisiert dar, inwiefern die Empfangsqualität bzw. das WLAN-Signal im Bereich um einen, bspw. hinter einem der Störfaktoren schlagartig abnimmt oder durch diese als Strahlungsquellen behindert wird. Hierdurch kann ein Nutzer die Störfaktoren ausmachen und entweder diese beheben oder zumindest dagegen vorgehen. Die Auswerteapplikation kann entsprechende Vorschläge zur Optimierung des Abdeckungsbereichs des WLANs geben. Die Darstellung des Abdeckungsbereichs des WLANs erfolgt durch die Auswerteapplikation in Echtzeit und kann somit dem Nutzer unmittelbar helfen, das WLAN bspw. als Heimnetzwerk zu verstehen und besser zu nutzen. In Figur 3 ist der Abdeckungsbereich des WLANs in Form eines Wabenmusters 301 dargestellt, wobei die jeweiligen Kreuzungspunkte der Waben jeweilige Schnittpunkte von Polygonen darstellen, die sich aus der Berechnung von jeweiligen Signalstärken an gewissen Positionen bzw. Raumpunkten im Raum 300 ergeben. Durch die realitätserweiterte Darstellung (Augmented Reality - AR) werden Positionen bzw. Punkte im Raum 300 wahrgenommen, zu denen eine jeweilige Signalstärke berechnet wurde, z. B. eine Kante eines Tischs. Die nächstgelegenen Positionen bzw. Raumpunkte plus deren jeweils berechnete Signalstärke ergeben die formgebenden Punkte eines jeweiligen Polygons. Die Ausrichtung/Neigung eines jeweiligen Polygons hängt von den das jeweilige Polygon bildenden Signalstärken und den umgebenden Polygonen ab.

Figur 4 zeigt eine alternative, hier schematische Darstellung des Abdeckungsbereichs des WLANs, wobei hier die Empfangsqualitäten an den verschiedenen Positionen innerhalb des Raums 400 durch jeweilige Wellen 401, 402 bspw. in unterschiedlichen Farben, hier schematisch in unterschiedlichen Linienstärken, dargestellt sind. Das bedeutet, dass die Empfangsqualität bzw. die jeweiligen Werte der Empfangsqualität durch verschiedene Farbgebungen bzw. Linienstärken differenziert werden können. Des Weiteren ist hier angezeigt, durch den Verlauf der jeweiligen Wellen, bspw. durch eine talartige Darstellung oder eine Erhöhung, dass die Empfangsqualität unmittelbar in Nachbarschaft zu einem Störfaktor, hier bspw. eines Kühlschranks 330, abnimmt und erst mit größerer Entfernung vom Kühlschrank 330 wieder zunimmt. Somit ist es auch in der visualisierten Darstellung für einen Nutzer einfach zu erkennen, welchen Einfluss die verschiedenen Störfaktoren auf die Abdeckung des WLANs bzw. die Empfangsqualität innerhalb des WLANs haben kann.

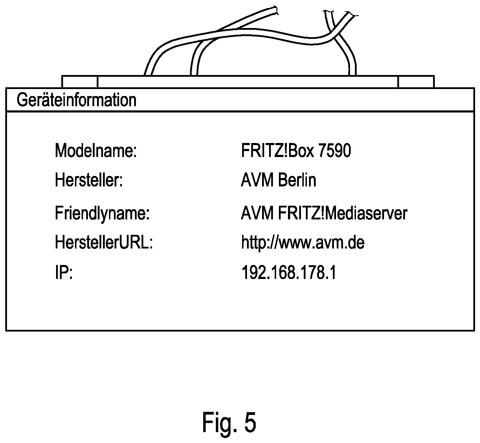

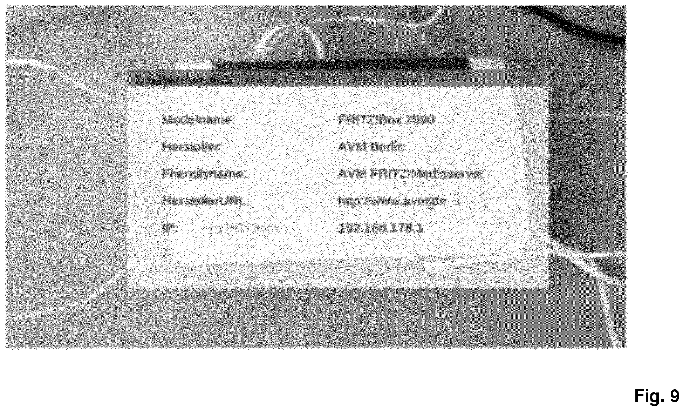

In Figur 5 ist dargestellt, wie in einer Ausführungsform des erfindungsgemäßen Verfahrens ein innerhalb des lokalen drahtlosen Kommunikationsnetzwerks sich befindendes Gerät von der auf der mobilen Kommunikationseinheit implementierten Auswerteapplikation erkannt und zusammen mit Geräteinformationen innerhalb der realitätserweiterten Darstellung (siehe Figur 9) angezeigt wird. Hier werden bspw. die Geräteinformationen dem eigentlichen Gerät überblendet bzw. die angezeigten Geräteinformation überdecken das Gerät. In dieser Ausgestaltung des erfindungsgemäßen Verfahrens wird es einem Nutzer ermöglicht, die mit seinem Heimnetzwerk, d. h. seinem WLAN, verbundenen Geräte zu erkennen und zu orten bzw. zu lokalisieren. Dabei werden die Geräte über die Kamera der mobilen Kommunikationseinheit zunächst visuell erkannt und durch die Auswerteapplikation als Teil des Heimnetzwerks identifiziert. Über UPnP werden sodann die relevanten Daten des Geräts ausgelesen und zusammen mit dem Gerät selbst auf der Anzeigeeinheit der mobilen Kommunikationseinheit innerhalb der realitätserweiterten Darstellung angezeigt. Bei den zusätzlichen Informationen zu dem Gerät kann es sich bspw. um Informationen zur Konnektivität des Geräts, um einen Gerätenamen und/oder einen Gerätetyp handeln. Durch diese Informationen kann die Auswerteapplikation, die auf der mobilen Kommunikationseinheit implementiert ist, zielgerichtete Verbesserungsvorschläge zur Verortung eines jeweiligen Geräts geben. Bspw. könnte ein Verbesserungsvorschlag darin bestehen, eine Neupositionierung des jeweiligen Geräts anzuraten, da dadurch gemäß Vorausberechnungen durch die Auswerteapplikation der jeweiligen Empfangsqualitäten des WLANs innerhalb des Raums eine jeweilige Empfangsqualität bei Verortung des jeweiligen Geräts an einer anderen Stelle im Raum besser wird, wodurch dem Kunden vorgeschlagen wird, das jeweilige Gerät an jenem Ort zu platzieren. Dadurch kann ein jeweiliger Nutzer in einfachen Schritten das WLAN-Signal für ein jeweilig entsprechendes Gerät durch Umpositionierung optimieren.

Figur 6 zeigt den in Figur 2 in schematischer Darstellung gezeigten visualisierten Abdeckungsbereich eines drahtlosen lokalen Kommunikationsnetzes als Foto bzw. realitätserweiterte Darstellung, wie sie erfindungsgemäß auf einer Anzeigeeinheit dargestellt werden kann. Das hier gezeigte Schwarz-Weiß-Foto mit eingeblendetem Abdeckungsbereich kann in weiterer Ausgestaltung auch als Farbfoto mit entsprechend darauf eingeblendetem ggf. farblich ausgestaltetem Abdeckungsbereich ausgestaltet sein. Die den Abdeckungsbereich symbolisierenden Punkte können bspw.

farblich markiert sein, so dass anhand der Farbgebung der Punkte erkennbar ist, wie die Signalstärke ab- und/oder zunimmt. So kann bspw. die Farbe "grün" für sehr gute, "gelb" für gute und "rot" für eher schlechte Empfangsqualität bzw. Signalstärke stehen.

Figur 7 zeigt die in Figur 3 in schematischer Darstellung gezeigte berechnete Visualisierung des Abdeckungsbereichs eines drahtlosen lokalen Kommunikationsnetzes innerhalb eines Wohnraums als, insbesondere digitales, Foto bzw. als realitätserweiterte Darstellung, wie sie erfindungsgemäß auf einer Anzeigeeinheit darstellbar ist. Die hier gezeigte Schwarz-Weiß-Darstellung kann in weiterer Ausgestaltung auch als Farbfoto mit darauf ggf. farblich kenntlich gemachter Visualisierung des Abdeckungsbereichs ausgestaltet sein.

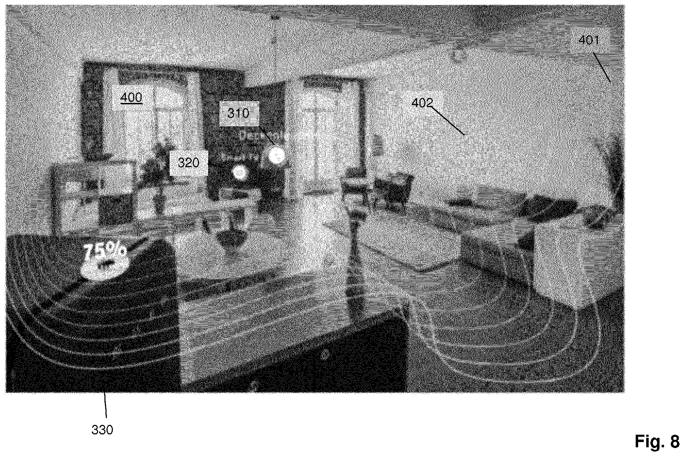

Figur 8 zeigt die in Figur 4 in schematischer Darstellung gezeigte alternative Visualisierung des Abdeckungsbereichs des drahtlosen lokalen Kommunikationsnetzes ebenfalls in Form einer Fotografie bzw. einer realitätserweiterten Darstellung, wie sie erfindungsgemäß auf einer Anzeigeeinheit, bspw. einem Display, der mobilen Kommunikationseinheit darstellbar ist. Die hier gezeigte Schwarz-Weiß-Darstellung kann in weiterer Ausgestaltung auch als Farbfoto mit darauf ggf. farblich kenntlich gemachter Visualisierung des Abdeckungsbereichs ausgestaltet sein.

Figur 9 zeigt die in Figur 5 schematisch dargestellte Anzeige eines erkannten Geräts innerhalb eines Abdeckungsbereichs eines drahtlosen lokalen Kommunikationsnetzes als Fotografie bzw. als realitätserweiterte Darstellung, wie sie erfindungsgemäß auf einer Anzeigeeinheit der mobilen Kommunikationseinheit, bspw. eines Smartphones, darstellbar ist. Die Geräteinformationen sind hier als Realitätserweiterung das reale Gerät überdeckend dargestellt.

**Patentansprüche**

1. Verfahren zur Visualisierung eines Abdeckungsbereichs eines drahtlosen lokalen Kommunikationsnetzes mittels einer mobilen Kommunikationseinheit, bei dem mittels einer auf der mobilen Kommunikationseinheit implementierten Navigationsapplikation eine initiale Position der mobilen Kommunikationseinheit in einem die mobile Kommunikationseinheit umgebenden dreidimensionalen realen Raum (200, 300, 400) ermittelt und als erster Punkt in einem dreidimensionalen Koordinatensystem, das dem Raum (200, 300, 400) überlagert wird, bereitgestellt wird (110), mittels einer Kamera der mobilen Kommunikationseinheit ein Zugangspunkt (210) des drahtlosen lokalen Kommunikationsnetzes in einem Bild aufgenommen und anhand des Bildes von der Navigationsapplikation eine Position des Zugangspunkts (210) in dem Koordinatensystem berechnet und als zweiter Punkt in dem Koordinatensystem bereitgestellt wird (120), an einer Mehrzahl von verschiedenen Positionen der mobilen Kommunikationseinheit in dem die mobile Kommunikationseinheit umgebenden Raum, die jeweils von der Navigationsapplikation als weitere Punkte in dem Koordinatensystem bereitgestellt werden, von der mobilen Kommunikationseinheit ein jeweiliger Wert einer Empfangsqualität von von dem Zugangspunkt (210) durch das drahtlose lokale Kommunikationsnetz an die mobile Kommunikationseinheit gesendeten Signalen gemessen (130) und zusammen mit der dem jeweiligen Wert zugeordneten Position der mobilen Kommunikationseinheit als jeweiliges Wertepaar abgespeichert wird (140), von einer auf der mindestens einen mobilen Kommunikationseinheit implementierten Auswerteapplikation auf Basis der gemessenen Wertepaare eine Extrapolation der jeweiligen Werte der Empfangsqualität auf alle von der Navigationsapplikation erfassbaren Positionen des Raums (200, 300, 400) und somit auf den Positionen jeweils zugeordneten Punkte des Koordinatensystems vorgenommen wird (150) und auf einer Anzeigeeinheit der mobilen Kommunikationseinheit der Raum (200, 300, 400) zusammen mit den jeweiligen Werten der Empfangsqualität an den den jeweiligen Werten der Empfangsqualität zugeordneten Positionen als realitätserweiterte Darstellung angezeigt wird (160) wobei die jeweilige Empfangsqualität durch Messung eines jeweiligen Received Signal Strength Indicators, RSSI, gemessen wird und die Extrapolation basierend auf nachfolgendem mathematischem Zusammenhang vorgenommen wird:

$$RSSI = k\,\frac{1}{d^m}$$

$$(1)$$

wobei *RSSI* die jeweils gemessene Empfangsqualität und d einen jeweiligen Abstand zwischen dem Zugangspunkt (210) und der jeweiligen der jeweils gemessenen Empfangsqualität zugeordneten Position der mobilen Kommunikationseinheit angeben und *k* und *m* durch eine lineare Regression über einen Logarithmus von *RSSI* und d bestimmt werden:

$$\log(RSSI) = \log(k) - m\log(d)$$

$$(2)$$

**2.** Verfahren nach Anspruch 1, bei dem als drahtloses lokales Kommunikationsnetz ein lokales Funknetz bzw. ein WLAN gewählt wird.

**3.** Verfahren nach einem der voranstehenden Ansprüche, bei dem bei Bewegung der mobilen Kommunikationseinheit kontinuierlich Wertepaare gemessen werden und die Extrapolation der Empfangsqualität auf Basis der kontinuierlich gemessenen Wertepaare dynamisch verbessert wird.

**4.** Verfahren nach einem der voranstehenden Ansprüche, bei dem ein Repeater virtuell und/oder real in dem Raum verortet wird und dessen Auswirkungen auf die jeweilige Empfangsqualität an den jeweiligen Positionen im Raum (200, 300, 400) berechnet werden und die jeweils resultierende Empfangsqualität in der realitätserweiterten Darstellung an den jeweiligen Positionen im Raum (200, 300, 400) auf der Anzeigeeinheit angezeigt wird.

**5.** Verfahren nach einem der voranstehenden Ansprüche, bei dem in dem Raum (200, 300, 400) sich real befindende Störfaktoren durch die Auswerteapplikation erkannt und in der realitätserweiterten Darstellung, insbesondere mit einer Darstellung einer jeweiligen durch einen jeweiligen Störfaktor bewirkten Störung auf die Empfangsqualität, angezeigt werden.

**6.** Verfahren nach einem der voranstehenden Ansprüche, bei dem an das drahtlose lokale Kommunikationsnetz angebundene Geräte durch die Kamera der mobilen Kommunikationseinheit visuell erkannt, mit der Navigationsapplikation geortet und durch die Auswerteapplikation als jeweiliger Teil des lokalen Kommunikationsnetzes identifiziert und in der realitätserweiterten Darstellung, insbesondere zusammen mit zusätzlichen Geräteinformationen, angezeigt werden.

**7.** Verfahren nach Anspruch 6, bei dem auf Basis einer jeweils festgestellten Verortung eines jeweiligen Geräts an einer jeweiligen Position im Raum (200, 300, 400) von der Auswerteapplikation eine Neupositionierung des jeweiligen Geräts vorgeschlagen und, insbesondere auf der Anzeigeeinheit, angezeigt wird, falls von der Auswerteapplikation erkannt wird, dass die Empfangsqualität für das jeweilige Gerät an einer anderen Position im Raum (200, 300, 400) höher ist.

**8.** Verfahren nach einem der voranstehenden Ansprüche, bei dem für den Fall, dass als Zugangspunkt (210) ein Hybrid-Router oder ein reiner LTE-Router verwendet wird, neben den jeweiligen Werten der Empfangsqualität von von dem Zugangspunkt (210) durch das drahtlose lokale Kommunikationsnetz an die jeweiligen von der Navigationsapplikation erfassbaren Positionen des Raums (200, 300, 400) gesendeten Signalen auch Werte einer jeweiligen Empfangsqualität von an die jeweiligen von der Navigationsapplikation erfassbaren Positionen des Raums (200, 300, 400) gesendeten LTE-Signalen bestimmt und angezeigt werden.

**9.** Mobile Kommunikationseinheit mit einer Kamera, die dazu konfiguriert ist, einen Zugangspunkt eines drahtlosen lokalen Kommunikationsnetzes in einem Bild aufzunehmen, mit einer auf der mobilen Kommunikationseinheit implementierten Navigationsapplikation, die dazu konfiguriert ist, eine initiale Position der mobilen Kommunikationseinheit in einem die mobile Kommunikationseinheit umgebenden dreidimensionalen realen Raum (200, 300, 400) zu ermitteln und als ersten Punkt in einem dreidimensionalen Koordinatensystem, das dem Raum (200, 300, 400) überlagert wird, bereitzustellen, und anhand des Bildes eine Position des Zugangspunkts (210) in dem Koordinatensystem zu berechnen und als zweiten Punkt in dem Koordinatensystem bereitzustellen, mit mindestens einem Sensor, der dazu ausgelegt ist, an einer Mehrzahl von verschiedenen Positionen der mobilen Kommunikationseinheit in dem die mobile Kommunikationseinheit umgebenden Raum (200, 300, 400), die jeweils von der Navigationsapplikation als weitere Punkte in dem Koordinatensystem bereitzustellen sind, einen jeweiligen Wert einer Empfangsqualität von von dem Zugangspunkt (210) durch das drahtlose lokale Kommunikationsnetz an die mobile Kommunikationseinheit gesendeten Signalen zu messen und zusammen mit der dem jeweiligen Wert zugeordneten Position der mobilen Kommunikationseinheit als jeweiliges Wertepaar in einem Datenspeicher abzuspeichern, mit dem Datenspeicher, und mit einer auf der mindestens einen mobilen Kommunikationseinheit implementierten Auswerteapplikation, die dazu konfiguriert ist, auf Basis der gemessenen Wertepaare eine Extrapolation der Werte der Empfangsqualität auf alle von der Navigationsapplikation erfassbaren Positionen des Raums (200, 300, 400) und somit auf den Positionen jeweils zugeordneten Punkte des Koordinatensystems vorzunehmen, und mit einer Anzeigeeinheit, die dazu konfiguriert ist, den Raum (200, 300, 400) zusammen mit den jeweiligen Werten der Empfangsqualität an den den jeweiligen Werten der Empfangsqualität zugeordneten Positionen als realitätserweiterte Darstellung darzustellen und anzuzeigen, bei der die Auswerteapplikation dazu ausgelegt ist, die jeweilige Empfangsqualität durch Messung eines jeweiligen Received Signal Strength Indicators, RSSI, zu messen und die Extrapolation basierend auf nachfolgendem mathematischem Zusammenhang vorzunehmen:

$$RSSI = k \frac{1}{d^m}$$

$$(1)$$

wobei *RSSI* die jeweils gemessene Empfangsqualität und d einen jeweiligen Abstand zwischen dem Zugangspunkt (210) und der jeweiligen der jeweils gemessenen Empfangsqualität zugeordneten Position der mobilen Kommunikationseinheit angeben und k und m durch eine lineare Regression über einen Logarithmus von *RSSI* und d bestimmt werden:

$$\log(RSSI) = \log(k) - m \log(d)$$

$$(2)$$

**10.** Mobile Kommunikationseinheit nach Anspruch 9, bei der das drahtlose lokale Kommunikationsnetz ein lokales Funknetz bzw. ein WLAN ist.

**11.** Mobile Kommunikationseinheit nach einem der Ansprüche 9 oder 10, die ausgelegt ist, bei Bewegung der mobilen Kommunikationseinheit kontinuierlich Wertepaare zu messen und die Extrapolation der Empfangsqualität auf Basis der kontinuierlich gemessenen Wertepaare dynamisch zu verbessern.

**12.** Mobile Kommunikationseinheit nach einem der Ansprüche 9 bis 11, bei der die Auswerteapplikation dazu ausgelegt ist, in dem Raum (200, 300, 400) sich real befindende Störfaktoren zu erkennen und in der realitätserweiterten Darstellung, insbesondere mit einer Darstellung einer jeweiligen durch einen jeweiligen Störfaktor bewirkten Störung auf die Empfangsqualität, mittels der Anzeigeeinheit anzuzeigen und insbesondere mindestens einen Vorschlag zu einer Optimierung der Empfangsqualität an mindestens einer Position in dem Raum (200, 300, 400) anzuzeigen.

**13.** Mobile Kommunikationseinheit nach einem der Ansprüche 9 bis 12, die dazu konfiguriert ist, ein Verfahren nach einem der Ansprüche 4 und 6-8 auszuführen.

**Claims**

**1.** A method for the visualization of an area covered by a wireless local communication network by means of a mobile communication unit, in which an initial position of the mobile communication unit in a three-dimensional real space (200, 300, 400) surrounding the mobile communication unit is determined by means of a navigation application implemented on the mobile communication unit, said position being provided (110) as the first point in a three-dimensional coordinate system superimposed on the space (200, 300, 400); in which, by means of a camera of the mobile communication unit, an access point (210) of the wireless local communication network is recorded in an image and, on the basis of the image, a position of the access point (210) in the coordinate system is calculated by the navigation application and provided (120) as a second point in the coordinate system; in which, at a plurality of different positions of the mobile communication unit in the space surrounding the mobile communication unit, which are each provided by the navigation application as further points in the coordinate system, the mobile communication unit measures (130) a respective value of a reception quality of signals sent from the access point (210) to the mobile communication unit via the wireless local communication network and stores (140) it together with the position of the mobile communication unit assigned to the respective value as a respective value pair; in which an evaluation application implemented on the at least one mobile communication unit carries out an extrapolation of the respective values of the reception quality on the basis of the measured value pairs to all positions of the space (200, 300, 400) which are detectable by the navigation application and thus to points of the coordinate system respectively assigned to the positions (150); and in which the space (200, 300, 400) is displayed (160) on a display unit of the mobile communication unit together with the respective values of the reception quality at the positions assigned to the respective values of the reception quality as an - augmented reality representation; wherein the respective reception quality is measured by measuring a respective Received Signal Strength Indicator, RSSI, and the extrapolation is carried out on the basis of the following mathematical relationship:

$$RSSI = k\,\frac{1}{d^m}$$

(1)

wherein *RSSI* indicates the respective measured reception quality and *d* indicates a respective distance between the access point (210) and the respective position of the mobile communication unit assigned to the respective measured reception quality, and *k* and *m* are determined by a linear regression via a logarithm of *RSSI* and d:

$$\log(RSSI) = \log(k) - m\log(d)$$

(2)

2. The method according to claim 1, in which a local radio network or a WLAN is selected as the wireless local communication network.

3. The method according to one of the preceding claims, in which value pairs are continuously measured when the mobile communication unit is moving and the extrapolation of the reception quality is dynamically improved on the basis of the continuously measured value pairs.

4. The method according to one of the preceding claims, in which a repeater is located virtually and/or in reality in the space and its effects on the respective reception quality at the respective positions in the space (200, 300, 400) are calculated and the respective resulting reception quality is displayed on the display unit in the augmented reality representation at the respective positions in the space (200, 300, 400).

5. The method according to one of the preceding claims, in which interference factors present in reality in the space (200, 300, 400) are detected by the evaluation application and displayed in the augmented reality representation, in particular with a representation of a respective interference with the reception quality caused by a respective interference factor.

6. The method according to one of the preceding claims, in which devices connected to the wireless local communication network are visually recognized by the camera of the mobile communication unit, located with the navigation application and identified by the evaluation application as a respective part of the local communication network and displayed in the augmented reality representation, in particular together with additional device information.

7. The method according to claim 6, in which, on the basis of a respectively determined localization of a respective device at a respective position in the space (200, 300, 400), a repositioning of the respective device is suggested by the evaluation application and is displayed, in particular on the display unit, if the evaluation application detects that the reception quality for the respective device is higher at another position in the space (200, 300, 400).

8. The method according to one of the preceding claims, in which, if a hybrid router or a pure LTE router is used as access point (210), in addition to the respective values of the reception quality of signals transmitted from the access point (210) via the wireless local communications network to the respective positions of the space (200, 300, 400) which are detectable by the navigation application, values of a respective reception quality of LTE signals transmitted to the respective positions of the space (200, 300, 400) which are detectable by the navigation application are also determined and displayed.

9. A mobile communication unit with a camera configured to record an access point of a wireless local communication network in an image, with a navigation application implemented on the mobile communication unit configured to determine an initial position of the mobile communication unit in a three-dimensional real space (200, 300, 400) surrounding the mobile communication unit and to provide said initial position as the first point in a three-dimensional coordinate system superimposed on the space (200, 300, 400), and to calculate a position of the access point (210) in the coordinate system on the basis of the image and to provide it as a second point in the coordinate system, with at least one sensor which is designed to measure at a plurality of different positions of the mobile communication unit in the space (200, 300, 400) surrounding the mobile communication unit, which are to be provided by the navigation application as further points in the coordinate system, a respective value of a reception quality of signals transmitted from the access point (210) to the mobile communication unit via the wireless local communication network and to store it together with the position of the mobile communication unit assigned to the respective value as a respective value pair in a data memory, with the data memory, and with an evaluation application implemented on the at least one mobile communication unit, which is configured to perform an extrapolation of the values of the reception quality on the basis of the measured value pairs to all positions of the space (200, 300, 400) and thus to the points of the coordinate system respectively assigned to the positions, and with a display unit which is configured to represent and display the space (200, 300, 400) together with the respective values of the reception quality at the positions assigned to the respective values of the reception quality as an augmented reality representation, in which the evaluation application is designed to measure the respective reception quality by measuring a respective Received Signal Strength Indicator, RSSI, and to carry out the extrapolation based on the following mathematical relationship:

$$RSSI = k\frac{1}{d^m}$$

$$(1)$$

wherein *RSSI* indicates the respective measured reception quality and d indicates a respective distance between the access point (210) and the respective position of the mobile communication unit assigned to the respective measured reception quality, and *k* and *m* are determined by a linear regression via a logarithm of *RSSI* and d:

$$\log(RSSI) = \log(k) - m\log(d)$$

$$(2)$$

10. The mobile communication unit according to claim 9, in which the wireless local communication network is a local radio network or a WLAN.

11. The mobile communication unit according to one of claims 9 or 10, which is designed to continuously measure value pairs when the mobile communication unit moves and to dynamically improve the extrapolation of the reception quality on the basis of the continuously measured value pairs.

12. The mobile communication unit according to one of claims 9 to 11, in which the evaluation application is designed to detect interference factors present in reality in the space (200, 300, 400) and to display them, by means of the display unit, in the augmented reality representation, in particular with a representation of a respective interference with the reception quality caused by a respective interference factor, and in particular to display at least one suggestion for optimizing the reception quality at at least one position in the space (200, 300, 400).

13. The mobile communication unit according to one of claims 9 to 12, which is configured to implement a method according to any one of claims 4 and 6-8.

**Revendications**

1. Procédé de visualisation d'une zone de couverture d'un réseau local de communication sans fil au moyen d'une unité de communication mobile, pour lequel au moyen d'une application de navigation implémentée sur l'unité de communication mobile, une position initiale de l'unité de communication mobile dans un espace (200, 300, 400) réel tridimensionnel enveloppant l'unité de communication mobile est déterminée et mise à disposition (110) en tant que premier point dans un système de coordonnées tridimensionnel, superposé à l'espace (200, 300, 400) ; au moyen d'une caméra de l'unité de communication mobile, un point d'accès (210) du réseau local de communication sans fil est enregistré dans une image et une position du point d'accès (210) est calculée dans le système de coordonnées à l'aide de l'image par l'application de navigation et mise à disposition (120) en tant que deuxième point dans le système de coordonnées ; au niveau d'une pluralité de différentes positions de l'unité de communication mobile dans l'espace enveloppant l'unité de communication mobile, qui sont mises à disposition respectivement par l'application de navigation sous la forme d'autres points dans le système de coordonnées, une valeur correspondante d'une qualité de réception de signaux transmis du point d'accès (210) à l'unité de communication mobile via le réseau local de communication sans fil est calculée (130) et sauvegardée (140) conjointement avec la position de l'unité de communication mobile associée à la valeur correspondante en tant que paire de valeurs par l'unité de communication mobile ;
sur la base des paires de valeurs mesurées, une application d'évaluation implémentée sur l'au moins une unité de communication mobile procède (150) à une extrapolation des valeurs correspondantes de la qualité de réception à toutes les positions de l'espace (200, 300, 400) pouvant être enregistrées par l'application de navigation et, partant, aux positions des points associés du système de coordonnées ; et l'espace (200, 300, 400) est affiché (160) sur une unité d'affichage de l'unité de communication mobile conjointement avec les valeurs correspondantes de la qualité de réception dans les positions associées aux valeurs de la qualité de réception sous la forme d'une représentation de réalité augmentée, sachant que la qualité de réception correspondante est déterminée en mesurant un Received Signal Strength Indicator, RSSI, et l'extrapolation est opérée sur la base du rapport mathématique suivant :

$$RSSI = k \frac{1}{d^m}$$

(1)

où *RSSI* désigne la qualité de réception mesurée et d désigne une distance entre le point d'accès (210) et la position correspondante de l'unité de communication mobile, associée à la qualité de réception mesurée, et *k* et *m* sont déterminées au moyen d'une régression linéaire par un logarithme de *RSSI* et *d* :

$$\log(RSSI) = \log(k) - m \log(d)$$

(2)

2. Procédé selon la revendication 1, pour lequel un réseau local de radiocommunication ou un réseau WI-FI est choisi comme réseau local de communication sans fil.

3. Procédé selon l'une des revendications précédentes, pour lequel, lors du déplacement de l'unité de communication mobile, des paires de valeurs sont mesurées continuellement et l'extrapolation de la qualité de réception est améliorée sur la base des paires de valeurs mesurées continuellement.

4. Procédé selon l'une des revendications précédentes, pour lequel un répéteur est situé en mode virtuel et/ou réel dans l'espace et ses répercussions sur la qualité de réception correspondante dans les positions correspondantes dans l'espace (200, 300, 400) sont calculées et la qualité de réception qui en résulte est affichée sur l'unité d'affichage dans la représentation de réalité augmentée dans les positions correspondantes dans l'espace (200, 300, 400).

5. Procédé selon l'une des revendications précédentes, pour lequel des facteurs de perturbation se trouvant réellement dans l'espace (200, 300, 400) sont identifiés par l'application d'évaluation et affichés dans la représentation de réalité augmentée, en particulier avec une représentation d'une perturbation causée par un facteur de perturbation sur la qualité de réception.

6. Procédé selon l'une des revendications précédentes, pour lequel des périphériques connectés au réseau local de communication sans fil sont reconnus visuellement par la caméra de l'unité de communication mobile, localisés par l'application de navigation et identifiés par l'application d'évaluation comme faisant partie du réseau local de communication et affichés dans la représentation de réalité augmentée, en particulier avec des informations complémentaires sur les périphériques.

7. Procédé selon la revendication 6, pour lequel, sur la base d'une localisation déterminée d'un périphérique dans une position correspondante dans l'espace (200, 300, 400), l'application d'évaluation propose un repositionnement du périphérique correspondant et l'affiche notamment sur l'unité d'affichage, si l'application d'évaluation reconnaît que la qualité de réception pour le périphérique correspondant est meilleure dans une autre position dans l'espace (200, 300, 400).

8. Procédé selon l'une des revendications précédentes, pour lequel au cas où un routeur hybride ou un routeur LTE pur serait utilisé en tant que point d'accès (210), les valeurs déterminées et affichées sont non seulement les valeurs correspondantes de la qualité de réception de signaux transmis par le point d'accès (210) via le réseau local de communication sans fil aux positions du local (200, 300, 400) pouvant être enregistrées par l'application de navigation, mais aussi des valeurs d'une qualité de réception de signaux LTE transmis aux positions de l'espace (200, 300, 400) pouvant être enregistrées par l'application de navigation.

9. Unité de communication mobile comportant une caméra configurée de manière à enregistrer un point d'accès d'un réseau local de communication dans une image ; une application de navigation implémentée sur l'unité de communication mobile, configurée de manière à déterminer une position initiale de l'unité de communication mobile dans un espace (200, 300, 400) réel tridimensionnel enveloppant l'unité de communication mobile et à la mettre à disposition en tant que premier point dans un système de coordonnées tridimensionnel, superposé à l'espace (200, 300, 400), et à calculer, à l'aide de l'image, une position du point d'accès (210) dans le système de coordonnées et à la mettre à disposition en tant que deuxième point dans le système de coordonnées ; au moins un capteur, conçu pour mesurer, au niveau d'une pluralité de différentes positions de l'unité de communication mobile dans l'espace (200, 300, 400) enveloppant l'unité de communication mobile, qui sont mises à disposition par l'application de navigation sous la forme d'autres points dans le système de coordonnées, une valeur correspondante d'une qualité de réception de signaux transmis du point d'accès (210) à l'unité de communication mobile via le réseau local de communication sans fil et pour la sauvegarder conjointement avec la position de l'unité de communication mobile, associée à la valeur correspondante, sous la forme d'une paire de valeurs correspondante dans une mémoire de données ; la mémoire de données ; et une application d'évaluation implémentée sur l'au moins une unité de communication mobile, configurée de manière à procéder, sur la base des paires de valeurs mesurées, à une extrapolation des valeurs de la qualité de réception à toutes les positions de l'espace (200, 300, 400) pouvant être enregistrées par l'application de navigation et, partant, aux positions des points associés du système de coordonnées ; ainsi qu'une unité d'affichage configurée de manière à présenter et à afficher l'espace (200, 300, 400) et les valeurs correspondantes de la qualité de réception dans les positions associées aux valeurs correspondantes de la qualité de réception sous la forme d'une représentation de réalité augmentée, l'application d'évaluation étant conçue de manière à déterminer la qualité de réception correspondante, en mesurant un Received Signal Strength Indicator, RSSI, et à procéder à l'extrapolation sur la base du rapport mathématique suivant :

$$RSSI = k\,\frac{1}{d^m}$$

$$(1)$$

où *RSSI* désigne la qualité de réception mesurée et d désigne une distance entre le point d'accès (210) et la position correspondante de l'unité de communication mobile, associée à la qualité de réception mesurée, et *k* et *m* sont déterminées au moyen d'une régression linéaire par un logarithme de *RSSI* et *d* :

$$\log(RSSI) = \log(k) - m\,\log(d)$$

$$(2)$$

10. Unité de communication mobile selon la revendication 9, pour laquelle le réseau local de communication sans fil est un réseau local de radiocommunication ou un réseau WI-FI.

11. Unité de communication mobile selon l'une des revendications 9 ou 10, conçue de manière à mesurer continuellement des paires de valeurs lors du déplacement de l'unité de communication mobile, et à améliorer l'extrapolation de la qualité de réception sur la base des paires de valeurs mesurées continuellement.

12. Unité de communication mobile selon l'une des revendications 9 à 11, pour laquelle l'application d'évaluation est conçue de manière à identifier des facteurs de perturbation se trouvant réellement dans l'espace (200, 300, 400) et à les afficher au moyen de l'unité d'affichage dans la représentation de réalité augmentée, en particulier avec une représentation d'une perturbation causée par un facteur de perturbation correspondant sur la qualité de réception, et à indiquer notamment au moins une proposition d'optimisation de la qualité de réception dans au moins une position dans l'espace (200, 300, 400).

13. Unité de communication mobile selon l'une des revendications 9 à 12, configurée de manière à réaliser un procédé selon l'une des revendications 4 à 6-8.

Fig. 1

200

210

Fig. 2

Fig. 3

Fig. 4

**Geräteinformation**

| | |
|---|---|
| Modelname: | FRITZ!Box 7590 |
| Hersteller: | AVM Berlin |
| Friendlyname: | AVM FRITZ!Mediaserver |
| HerstellerURL: | http://www.avm.de |
| IP: | 192.168.178.1 |

## Fig. 5

Fig. 6

**Fig. 7**

Fig. 8

Fig. 9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 9451413 B1
- US 20170127289 A1
- US 20110244892 A1